# EUROPEAN PATENT SPECIFICATION

(11) **EP 3 189 062 B1**
(45) Date of publication and mention of the grant of the patent: **01.05.2024**
(21) Application number: 15763696.0
(22) Date of filing: 26.08.2015
(51) Int. Cl.: C07F 5/06, C08F 110/02, C08F 4/6592

(54) **PROCESS FOR PRODUCING CATALYST ACTIVATORS**
PROZESS ZUR HERSTELLUNG VON KATALYSATORAKTIVATOREN
PROCÉDÉ DE PRÉPARATION D'ACTIVATEURS CATALYTIQUES

(30) Priority: 03.09.2014 US 201462045225 P
(43) Date of publication of application: 12.07.2017
(73) Proprietor: Univation Technologies, LLC, Houston, TX 77056 (US)
(72) Inventor: MUNRO, Ian M., Freeport, Texas 77566 (US); CANN, Kevin J., Tierra Verde, Florida 33715 (US)
(74) Representative: Boult Wade Tennant LLP
(86) International application number: PCT/US2015/046955
(87) International publication number: WO 2016/036559

(56) References cited:
- WO-A1-94/10180
- WO-A2-2008/036591
- US-B1- 6 664 208
- MASAYUKI FUJITA ET AL: "Enhancement of Productivity, Molecular Weight and Stereoregularity of 1-Butene Polymerization by MAO Modification", MACROMOLECULAR CHEMISTRY AND PHYSICS., vol. 205, no. 7, 1 May 2004 (2004-05-01), pages 884-887, XP055225296, DE ISSN: 1022-1352, DOI: 10.1002/macp.200400060
- I TRITTO ET AL: "Novel aluminum based cocatalysts for metallocene catalyzed olefin polymerization", JOURNAL OF MOLECULAR CATALYSIS A: CHEMICAL., vol. 204-205, 15 September 2003 (2003-09-15), pages 305-314, XP055225514, NL ISSN: 1381-1169, DOI: 10.1016/S1381-1169(03)00312-1

## Description

### FIELD

The present disclosure relates to methods for preparing catalyst activators and to their use in processes for polymerizing olefins. In particular, the disclosure is directed to catalyst activators derived from aluminum alkyls and to their use with metallocene type catalysts and/or conventional-type transition metal catalysts.

### BACKGROUND

Masayuki Fujita et al: "Enhancement of productivity, molecular weight and stereoregularity of 1-butene polymerization by MAO modification", Macromolecular Chemistry and Physics, vol. 205, no. 7, 1 May 2004, pages 884-887 relates to the enhancement of productivity, molecular weight and stereoregularity of 1-butene polymerization by MAO modification. US 6664208 relates to a modified aluminum oxy compound, a polymerization catalyst containing said modified aluminum oxy compound as a component, and a process for producing a polymer with said catalyst.

WO 2008/036591 relates to catalyst activators, processes for making same, and use thereof in catalysts and polymerization of olefins.

WO 94/10180 relates to aryloxyaluminoxanes where an unsubstituted or substituted aryloxy group is directly bonded to the aluminum atom of an aluminoxane so that a predominant amount of aryloxy moieties, such as those comprising an -OC₆H₅ structure, are a substituent on aluminum.

I Tritto et al: "Novel aluminum based cocatalysts for metallocene catalysed olefin polymerization", Journal of Molecular Catalysis A: Chemical., vol. 204-205, 15 September 2003, pages 305-314 relates to novel aluminum based cocatalysts for metallocene catalysed olefin polymerization.

A major focus of the polyolefin industry in recent years has been on the development of new catalysts that deliver new and improved products. Metallocene catalysts, for example, are now widely used to produce polyolefin polymers, such as polyethylene polymers. Metallocene catalysts generally require an activator or cocatalyst in order to achieve commercially acceptable activity levels. In this regard, the use of methylalumoxane (MAO) as an activator or cocatalyst for metallocene catalysts, particularly supported catalysts, is ubiquitous.

However, MAO does have distinct disadvantages. It is expensive to prepare, in part due to the high cost of the primary raw material trimethylaluminum (TMA). Further, batch to batch consistency of MAO may be variable.

Molecular activators or co-catalysts such as Lewis acidic boranes have also been utilized with metallocenes however their usefulness in particle forming processes such as gas and slurry phase processes may be complicated by their fast polymerization kinetics which may lead to polymer particle morphology issues and subsequent reactor fouling.

Therefore, it would be desirable to provide potentially low cost activators or cocatalysts useful in olefin polymerization that are advantageous to prepare and handle and are also capable of operating in a polymerization process with good productivity.

### SUMMARY

In one aspect of the invention there is provided a method for producing an activator composition for olefin polymerization, the method comprising the steps of:
(a) combining at least one compound comprising at least one active hydrogen moiety and at least one fluorine substituent with water; and
(b) adding at least one compound comprising at least one aluminum alkyl moiety;
wherein the at least one compound comprising at least one aluminum alkyl moiety is a trialkylaluminum.

The at least one compound comprising at least one aluminum alkyl moiety is a trialkylaluminum.

The trialkylaluminum may be trimethylaluminum, triethylaluminum, triisopropylaluminum, triisobutylaluminum, trihexylaluminum or combinations thereof.

The at least one compound comprising at least one active hydrogen moiety and at least one fluorine substituent may be represented by the formula:

(F)ₙ-R-(T-H)ₘ

wherein R is an organic moiety comprising up to 100 non-hydrogen atoms;
T is -O, -S, -NR' or -PR' wherein R' is a hydrocarbyl radical, a trihydrocarbylsilyl radical, a trihydrocarbyl germyl radical or hydrogen;
n is a number equal to 1 or greater; and
m is a number from 1 to 10.

The at least one active hydrogen moiety may be -OH, -SH, -NHR" or -PHR" wherein R" is a hydrocarbyl radical, a trihydrocarbylsilyl radical, a trihydrocarbyl germyl radical or hydrogen.

The at least one compound comprising at least one active hydrogen moiety and at least one fluorine substituent may be represented by the formula:

(F)ₙ-R-(OH)ₘ

wherein R is an organic moiety comprising up to 100 non-hydrogen atoms;
n is a number equal to 1 or greater; and
m is a number from 1 to 5.

The at least one compound comprising at least one active hydrogen moiety and at least one fluorine substituent may be represented by the formula:

(F)ₙ-Ar-(OH)ₘ

wherein Ar is an aromatic or heteroaromatic moiety comprising up to 100 non-hydrogen atoms;
n is a number equal to 1 or greater; and
m is a number from 1 to 5.

The at least one compound comprising at least one active hydrogen moiety and at least one fluorine substituent may be represented by the formula:

(F)ₙ-Ph-(OH)ₘ

wherein n is a number from 1 to 5; and
m is a number from 1 to 5.

The at least one compound comprising at least one active hydrogen moiety and at least one fluorine substituent may be represented by the formula:

(F)ₙ-R^{a}-(OH)ₘ

wherein Ra is an aliphatic moiety comprising up to 100 non-hydrogen atoms;
n is a number equal to one or greater; and
m is a number from 1 to 5.

The activator composition may comprise the reaction product(s) of a trialkylaluminum, a fluorophenol and water. The fluorophenol may be perfluorophenol. The trialkylaluminum may be triisobutylaluminum. The activator composition may comprise the reaction product(s) of triisobutylaluminum, perfluorophenol and water

There is also provided a supported activator composition for olefin polymerization comprising any one or more of the aforementioned activator compositions and a support. The support may comprise one or more compounds comprising Group 2, 3, 4, 5, 13 and 14 oxides and chlorides or particulate organic materials. The support may be a particulate inorganic or particulate organic material. The particulate inorganic material may be a particulate inorganic oxide. The particulate inorganic oxide may be a particulate silica or a particulate alumina. The support may be a treated support wherein the aforementioned support is treated with one or more compounds that react with chemical functionality on the support surface, such as one or more aluminum alkyl compounds, alumoxanes or silanes.

In some forms the supported activator composition may have the activator composition, at least in part, chemically bonded to the support. In other forms the supported activator composition may have the activator composition physically mixed with the support, that is, not chemically bonded to the support.

There is provided an activator composition for olefin polymerization comprising at least one compound comprising at least one [Al-O-R] moiety wherein R is an organic moiety having up to 100 non-hydrogen atoms and wherein R comprises at least one fluorine substituent.

In the compound comprising at least one [Al-O-R] moiety -O-R may independently each occurrence be a fluoroaryloxy moiety, a substituted fluoroaryloxy moiety, a fluoroheteroaryloxy moiety, a substituted fluoroheteroaryloxy moiety, a fluorohydrocarbyloxy moiety or a substituted fluorohydrocarbyloxy moiety.

The fluoroaryloxy moiety may be a fluorophenoxy moiety such as a perfluorophenoxy moiety having from 1 to 5 fluorine substituents. The fluorophenoxy moiety may be pentafluorophenoxy. The fluorohydrocarbyloxy moiety may be a fluoroalkoxy moiety such as a C₁-C₃₀ alkoxy moiety having one or more fluorine substituents. The fluoroalkoxy moiety may be trifluoromethoxy or pentafluoroethoxy.

In the compound comprising at least one [Al-O-R] moiety -O-R may be a hydrocarbyloxy or aryloxy or heteroaryloxy moiety which themselves are substituted with one or more fluorine containing substituents. For example -O-R may be an aryloxy moiety having one or more trifluoromethyl substituents.

The compound comprising at least one [Al-O-R] moiety according to this aspect may comprise two or more aluminum atoms.

The aluminum atom of the at least one [Al-O-R] moiety may be further substituted with one or more linear or branched C₁-C₃₀ alkyl groups, or one or more C₁-C₁₀ alkyl groups or one or more C₁-C₆ alkyl groups.

There is also provided a supported activator composition for olefin polymerization comprising any one or more of the aforementioned compounds comprising at least one [Al-O-R] moiety according to this aspect and a support. The support may comprise one or more compounds comprising Group 2, 3, 4, 5, 13 and 14 oxides and chlorides or particulate organic materials. The support may be a particulate inorganic or particulate organic material. The particulate inorganic material may be a particulate inorganic oxide. The particulate inorganic oxide may be a particulate silica or a particulate alumina. The support may be a treated support wherein the aforementioned support is treated with one or more compounds that react with chemical functionality on the support surface, such as one or more aluminum alkyl compounds, alumoxanes or silanes.

In some forms the supported activator composition may have the compound comprising at least one [Al-O-R] moiety according to this aspect, at least in part, chemically bonded to the support. In other forms the supported activator composition may have the compound comprising

at least one [Al-O-R] moiety according to this aspect physically mixed with the support, that is, not chemically bonded to the support.

There is provided an activator composition for olefin polymerization comprising one or more of a fluoroalkoxyalumoxane, a fluoroaryloxyalumoxane or a fluoroheteroaryloxyalumoxane of formula:

R₁ - (AlR₃O)ₘ- R₂

wherein R₁ and R₂ independently each occurrence is a C₁-₄₀ aliphatic or aromatic group or a fluorinated derivative thereof or R₁ and R₂ together form a covalent bond;
wherein R₃ independently each occurrence is a monovalent, fluorinated alkoxy, aryloxy or heteroaryloxy group containing from 1 to 100 carbon atoms or R₁, with the proviso that in least one occurrence per molecule, R₃ is a monovalent fluorinated alkoxy, aryloxy or heteroaryloxy group containing from 1 to 100 carbon atoms; and
m is a number from 1 to 1000.

The fluoroaryloxy moiety may be a fluorophenoxy moiety such as a perfluorophenoxy moiety having from 1 to 5 fluorine substituents. The fluorophenoxy moiety may be pentafluorophenoxy. The fluoroalkoxy moiety may be a C₁-C₃₀ alkoxy moiety having one or more fluorine substituents. The fluoroalkoxy moiety may be trifluoromethoxy or pentafluoroethoxy.

There is also provided a supported activator composition for olefin polymerization comprising any one or more of the aforementioned fluoroalkoxy alumoxanes, fluoroaryloxyalumoxanes or fluoroheteroaryloxyalumoxanes according to this aspect and a support. The support may comprise one or more compounds comprising Group 2, 3, 4, 5, 13 and 14 oxides and chlorides or particulate organic materials. The support may be a particulate inorganic or particulate organic material. The particulate inorganic material may be a particulate inorganic oxide. The particulate inorganic oxide may be a particulate silica or a particulate alumina. The support may be a treated support wherein the aforementioned supports are treated one with one or more compounds that react with chemical functionality on the support surface, such as one or more aluminum alkyl compounds, alumoxanes or silanes.

In some forms the supported activator composition may have the fluoroalkoxyalumoxane, fluoroaryloxyalumoxane or fluoroheteroaryloxyalumoxane, at least in part, chemically bonded to the support. In other forms the supported activator composition may have the fluoroalkoxyalumoxane, fluoroaryloxyalumoxane or fluoroheteroaryloxyalumoxane physically mixed with the support, that is, not chemically bonded to the support.

The activator compositions and supported activator compositions as hereinbefore described are simple to prepare and utilize readily accessible and comparatively inexpensive materials. When combined with suitable catalyst compounds the activator compositions or supported activator compositions provide catalyst compositions or supported catalyst compositions that have excellent activity in olefin polymerization.

There is provided a fluoroalkoxyalumoxane, fluoroaryloxyalumoxane or fluoroheteroaryloxyalumoxane of formula:

R₁ - (AlR₃O)m- R₂

wherein R₁ and R₂ independently each occurrence is a C₁-₄₀ aliphatic or aromatic group or a fluorinated derivative thereof or R₁ and R₂ together form a covalent bond;
wherein R₃ independently each occurrence is a monovalent, fluorinated alkoxy, aryloxy or heteroaryloxy group containing from 1 to 100 carbon atoms or R₁, with the proviso that in least one occurrence per molecule, R₃ is a monovalent fluorinated alkoxy, aryloxy or heteroaryloxy group containing from 1 to 100 carbon atoms; and
m is a number from 1 to 1000.

The fluoroaryloxy moiety may be a fluorophenoxy moiety such as a perfluorophenoxy moiety having from 1 to 5 fluorine substituents. The fluorophenoxy moiety may be pentafluorophenoxy. The fluoroalkoxy moiety may be a C₁-C₃₀ alkoxy moiety having one or more fluorine substituents. The fluoroalkoxy moiety may be trifluoromethoxy or pentafluoroethoxy.

There is also provided a catalyst composition comprising any one or more of the activator compositions as hereinbefore described and one or more catalyst compounds. The catalyst compounds may comprise a titanium, a zirconium or a hafnium atom.

There is also provided a supported catalyst composition comprising a support, any one or more of the activator compositions as hereinbefore described and one or more catalyst compounds. The catalyst compounds may comprise a titanium, a zirconium or a hafnium atom.

There is also provided a supported catalyst compound comprising any one or more of the supported activator compositions as hereinbefore described and one or more catalyst compounds. The catalyst compounds may comprise a titanium, a zirconium or a hafnium atom.

The supported catalyst compositions may be in the form of a substantially dry powder or may be in the form of a slurry in a suitable liquid vehicle. The liquid vehicle may be an aliphatic or aromatic hydrocarbon or mixtures thereof. The liquid vehicle may also be a mineral oil.

The catalyst compound may comprise:
(pentamethylcyclopentadienyl)(propylcyclopentadienyl)MX₂,
(tetramethylcyclopentadienyl)(propylcyclopentadienyl)MX₂,
(tetramethylcyclopentadienyl)(butylcyclopentadienyl)MX₂,
Me₂Si(indenyl)₂MX₂,
Me₂Si(tetrahydroindenyl)₂MX₂,
(n-propyl cyclopentadienyl)₂MX₂,
(n-butyl cyclopentadienyl)₂MX₂,
(1-methyl, 3-butyl cyclopentadienyl)₂MX₂,
HN(CH₂CH₂N(2,4,6-Me₃phenyl))₂MX₂,
HN(CH₂CH₂N(2,3,4,5,6-Me₅phenyl))₂MX₂,
(propyl cyclopentadienyl)(tetramethylcyclopentadienyl)MX₂,
(butyl cyclopentadienyl)₂MX₂,
(propyl cyclopentadienyl)₂MX₂, and mixtures thereof,
wherein M is Zr or Hf, and X is selected from F, Cl, Br, I, Me, benzyl, CH₂SiMe₃, and C₁ to C₅ alkyls or alkenyls.

The catalyst compositions or supported catalyst compositions as hereinbefore described may comprise two or more catalyst compounds comprising a titanium, a zirconium, or a hafnium atom.

Also disclosed herein are methods for making the activator compositions and supported activator compositions as hereinbefore described, methods for making the catalyst compositions and supported catalyst compositions as hereinbefore described and polymerization processes utilizing the compositions.

The method may be performed in the presence of one or more suitable liquid vehicles.

The method comprises the steps of:
(a) combining at least one compound comprising at least one active hydrogen moiety and at least one fluorine substituent with water; and
(b) adding at least one compound comprising at least one aluminum alkyl moiety, wherein the at least one compound comprising at least one aluminum alkyl moiety is a trialkylaluminum.

There is also provided a method for producing a supported activator composition for olefin polymerization, comprising the step of;
combining, in any order, at least one support as hereinbefore described, for example at least one particulate inorganic or particulate organic material, at least one compound comprising at least one aluminum alkyl moiety, at least one compound comprising at least one active hydrogen moiety and at least one fluorine substituent; and water.

The method may be performed in the presence of one or more suitable liquid vehicles.

The method may comprise the steps of:
(a) combining at least one compound comprising at least one active hydrogen moiety and at least one fluorine substituent with water;
(b) combining (a) with at least one compound comprising at least one aluminum alkyl moiety; and
(c) combining (b) with at the least one support.

The support may be a particulate inorganic or organic material. The particulate inorganic material may be a particulate inorganic oxide. The particulate inorganic oxide may be a particulate silica or a particulate alumina. The support may be treated with one or more reactive compounds such as aluminum alkyl, alumoxane or silane compounds prior to combining with (b).

There is also disclosed a method for producing an activator composition comprising at least one compound having at least one [Al-O-R] moiety wherein R is an organic moiety having up to 100 non-hydrogen atoms and wherein R comprises at least one fluorine substituent comprising the step of:
combining, in any order, at least one compound comprising at least one aluminum alkyl moiety, at least one compound comprising at least one active hydrogen moiety and at least one fluorine substituent; and water.

There also disclosed a method for producing a supported activator composition comprising the step of combining at least one compound having at least one [Al-O-R] moiety wherein R is an organic moiety having up to 100 non-hydrogen atoms and wherein R comprises at least one fluorine substituent and a support.

In the compound comprising at least one [Al-O-R] moiety -O-R may independently each occurrence be a fluoroaryloxy moiety, a substituted fluoroaryloxy moiety, a fluoroheteroaryloxy moiety, a substituted fluoroheteroaryloxy moiety, a fluorohydrocarbyloxy moiety or a substituted fluorohydrocarbyloxy moiety.

There is also disclosed a method for producing a supported activator composition comprising the step of combining a fluoroalkoxyalumoxane a fluoroaryloxyalumoxane or a fluoroheteroaryloxyalumoxane of formula:

R₁ - (AlR₃O)ₘ - R₂

wherein R₁ and R₂ independently each occurrence is a C₁₋₄₀ aliphatic or aromatic group or a fluorinated derivative thereof or R₁ and R₂ together form a covalent bond;
wherein R₃ independently each occurrence is a monovalent, fluorinated alkoxy, aryloxy or heteroaryloxy group containing from 1 to 100 carbon atoms or R₁, with the proviso that in least one occurrence per molecule, R₃ is a monovalent fluorinated alkoxy, aryloxy or heteroaryloxy group containing from 1 to 100 carbon atoms; and
m is a number from 1 to 1000, with a support.

There is also provided a method for producing a fluoroalkoxyalumoxane, fluoroaryloxyalumoxane or fluoroheteroaryloxyalumoxane of formula:

R₁ - (AlR₃O)ₘ - R₂

wherein R₁ and R₂ independently each occurrence is a C₁₋₄₀ aliphatic or aromatic group or a fluorinated derivative thereof or R₁ and R₂ together form a covalent bond;
wherein R₃ independently each occurrence is a monovalent, fluorinated alkoxy, aryloxy or heteroaryloxy group containing from 1 to 100 carbon atoms or R₁, with the proviso that in least one occurrence per molecule, R₃ is a monovalent fluorinated alkoxy, aryloxy or heteroaryloxy group containing from 1 to 100 carbon atoms; and
m is a number from 1 to 1000; comprising the step of combining in any order, at least one compound comprising at least one aluminum alkyl moiety, at least one compound comprising at least one active hydrogen moiety and at least one fluorine substituent; and water.

There is also provided a method of producing a catalyst composition comprising combining any one or more of the activator compositions as hereinbefore disclosed with one or more catalyst compounds. The catalyst compounds may comprise a titanium, zirconium or hafnium atom.

There is also provided a method of producing a supported catalyst composition comprising combining any one or more of the supported activator compositions as hereinbefore disclosed with one or more catalyst compounds. The catalyst compounds may comprise a titanium, zirconium or hafnium atom.

There is also disclosed herein a process for polymerizing olefins, the process comprising: contacting olefins with one or more catalyst compositions or supported catalyst compositions as hereinbefore disclosed in a reactor under polymerization conditions to produce an olefin polymer or copolymer.

### BRIEF DESCRIPTION OF THE FIGURES

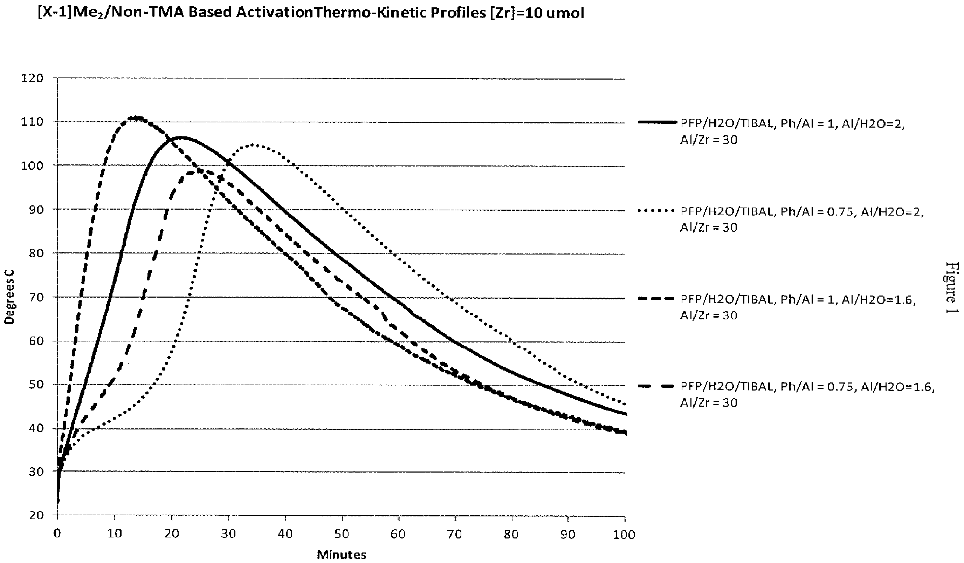

Figure 1 illustrates the change in temperature with time for the polymerizations of 1-Octene with activator compositions and catalyst compositions provided in the Examples Section.

### DETAILED DESCRIPTION

Before the present compounds, components, compositions, and/or methods are disclosed and described, it is to be understood that unless otherwise indicated this invention is not limited to specific compounds, components, compositions, reactants, reaction conditions, ligands, metallocene structures, as such may vary, unless otherwise specified. It is also to be understood that the terminology used herein is for the purpose of describing particular embodiments only and is not intended to be limiting.

It must also be noted that, as used in the specification and the appended claims, the singular forms "a," "an" and "the" include plural referents unless otherwise specified. Thus, for example, reference to "a leaving group" as in a moiety "substituted with a leaving group" includes more than one leaving group, such that the moiety may be substituted with two or more such groups. Similarly, reference to "a halogen atom" as in a moiety "substituted with a halogen atom" includes more than one halogen atom, such that the moiety may be substituted with two or more halogen atoms, reference to "a substituent" includes one or more substituents, reference to "a ligand" includes one or more ligands.

As used herein, all reference to the Periodic Table of the Elements and groups thereof is to the NEW NOTATION published in HAWLEY'S CONDENSED CHEMICAL DICTIONARY, Thirteenth Edition, John Wiley & Sons, Inc., (1997) (reproduced there with permission from IUPAC), unless reference is made to the Previous IUPAC form noted with Roman numerals (also appearing in the same), or unless otherwise noted.

Disclosed herein are activator compositions and supported activator compositions for use in the polymerization of olefins which are advantageous to prepare and use. In combination with one or more catalyst compounds the activator compositions and supported activator compositions provide catalyst compositions and supported catalyst compositions of high activity in olefin polymerization processes. Also disclosed herein are methods of making the activator compositions, supported activator composition, catalyst compositions and supported catalyst compositions and polymerization processes utilizing the catalyst compositions and supported catalyst compositions for the production of olefin polymers.

### Activator compositions

The activator compositions disclosed herein may comprise the reaction product(s) of:
(a) at least one compound comprising at least one aluminum alkyl moiety;
(b) at least one compound comprising at least one active hydrogen moiety and at least one fluorine substituent; and
(c) water.

The at least one compound comprising at least one aluminum alkyl moiety is a trialkylaluminum.

The trialkylaluminum may be trimethylaluminum, triethylaluminum, triisopropylaluminum, triisobutylaluminum, trihexylaluminum or mixtures thereof.

The at least one compound comprising at least one active hydrogen moiety and at least one fluorine substituent may be represented by the formula:

(F)ₙ-R-(T-H)ₘ

wherein R is an organic moiety comprising up to 100 non-hydrogen atoms;
T is -O, -S, -NR' or -PR' wherein R' is a hydrocarbyl radical, a trihydrocarbylsilyl radical, a trihydrocarbyl germyl radical or hydrogen;
n is a number equal to 1 or greater; and
m is a number from 1 to 10.

The at least one active hydrogen moiety may be -OH, -SH, -NHR" or -PHR" wherein R" is a hydrocarbyl radical, a trihydrocarbylsilyl radical, a trihydrocarbyl germyl radical or hydrogen.

The at least one compound comprising at least one active hydrogen moiety and at least one fluorine substituent may be represented by the formula:

(F)ₙ-R-(OH)ₘ

wherein R is an organic moiety comprising up to 100 non-hydrogen atoms;
n is a number equal to 1 or greater; and
m is a number from 1 to 5.

The at least one compound comprising at least one active hydrogen moiety and at least one fluorine substituent may be represented by the formula:

(F)ₙ-Ar-(OH)ₘ

wherein Ar is an aromatic or heteroaromatic moiety comprising up to 100 non-hydrogen atoms;
n is a number equal to 1 or greater; and
m is a number from 1 to 5.

The at least one compound comprising at least one active hydrogen moiety and at least one fluorine substituent may be represented by the formula:

(F)ₙ-Ph-(OH)ₘ

wherein n is a number from 1 to 5; and
m is a number from 1 to 5.

The at least one compound comprising at least one active hydrogen moiety and at least one fluorine substituent may be represented by the formula:

(F)ₙ-R^{a}-(OH)ₘ

wherein Ra is an aliphatic moiety comprising up to 100 non-hydrogen atoms;
n is a number equal to one or greater; and
m is a number from 1 to 5.

The molar ratio of the at least one compound comprising at least one active hydrogen moiety and at least one fluorine substituent to the at least one compound comprising at least one aluminum alkyl moiety may be from about 1:10 to about 10:1, or from about 1:5 to about 5:1, or from about 1:2 to about 2:1.

The molar ratio of the at least one compound comprising at least one aluminum alkyl moiety to water may be from about 1:10 to about 10:1, or from about 1:5 to about 5:1, or from about 1:2 to about 2:1.

The at least one compound comprising at least one active hydrogen moiety and at least one fluorine substituent may be a fluorine substituted alcohol or phenol. Exemplary fluorine substituted phenols include mono-, di-, tri-, tetra-, or pentafluorophenol.

The activator composition may comprise the reaction product(s) of a trialkylaluminum, a fluorophenol and water. The activator composition may comprise the reaction product(s) of a trialkylaluminum, perfluorophenol and water. The activator composition may comprise the reaction product(s) of triisobutylaluminum, perfluorophenol and water.

The activator composition is prepared by combining at least one compound comprising at least one aluminum alkyl moiety, at least one compound comprising at least one active hydrogen moiety and at least one fluorine substituent; and water.

The preparation may be performed in the presence of one or more suitable liquids.

The preparation comprises the steps of:
(a) combining at least one compound comprising at least one active hydrogen moiety and at least one fluorine substituent with water; and
(b) adding at least one compound comprising at least one aluminum alkyl moiety,
wherein the at least one compound comprising at least one aluminum alkyl moiety is a trialkylaluminum.

The activator compositions may be prepared by combining a fluorophenol and water followed by addition of a trialkylaluminum. The activator compositions may be prepared by combining perfluorophenol and water followed by addition of a trialkylaluminum. The activator compositions may be prepared by combining perfluorophenol and water followed by addition of triisobutylaluminum.

The components may be combined at elevated temperature. The contact temperature may be greater than 20°C, or 30°C, or 40°C, or 50°C, or 60°C, or 70°C, or 80°C, or 90°C, or 100°C, or 110°C, or 120°C, or 130°C.

The contacting may be performed under an inert gaseous atmosphere, such as nitrogen.

The contact time may vary depending on one or more of the conditions, temperature and pressure, the type of mixing apparatus, the quantities of the components to be combined, and even the mechanism for introducing the materials.

The components may be combined for a period of time from about a second to about 24 hours, or from about 1 minute to about 12 hours, or from about 1 minute to about 5 hours, or from about 2 minutes to about 2 hours.

The activator compositions disclosed herein may also comprise at least one compound having at least one [Al-O-R] moiety wherein R is an organic moiety having up to 100 non-hydrogen atoms and wherein R comprises at least one fluorine substituent.

In the compound having at least one [Al-O-R] moiety -O-R may be a fluoroaryloxy moiety, a substituted fluoroaryloxy moiety, a fluoroheteroaryloxy moiety, a substituted fluoroheteroaryloxy moiety a fluorohydrocarbyloxy moiety or a substituted fluorohydrocarbyloxy moiety.

The fluoroaryloxy moiety may be a fluorophenoxy moiety such as a perfluorophenoxy moiety having from 1 to 5 fluorine substituents. The fluorophenoxy moiety may be pentafluorophenoxy. The fluorohydrocarbyloxy moiety may be a fluoroalkoxy moiety such as a C1-C30 alkoxy moiety having one or more fluorine substituents. The fluoroalkoxy moiety may be trifluoromethoxy or pentafluoroethoxy.

In the compound having at least one [Al-O-R] moiety -O-R may be hydrocarbyloxy or aryloxy or heteroaryloxy moiety which themselves are substituted with one or more fluorine containing substituents. For example -O-R may be an aryloxy moiety having one or more trifluoromethyl substituents.

The compound having at least one [Al-O-R] moiety according to this aspect may comprise two or more aluminum atoms.

The compound having at least one [Al-O-R] moiety may be prepared by combining, in any order, at least one compound comprising at least one aluminum alkyl moiety, at least one compound comprising at least one active hydrogen moiety and at least one fluorine substituent; and water.

The molar ratio of the at least one compound comprising at least one active hydrogen moiety and at least one fluorine substituent to the at least one compound comprising at least one aluminum alkyl moiety may be from about 1:10 to about 10:1, or from about 1:5to about 5:1, or from about 1:2 to about 2:1.

The molar ratio of the at least one compound comprising at least one aluminum alkyl moiety to water may be from about 1:10 to about 10:1, or from about 1:5to about 5:1, or from about 1:2 to about 2:1.

The preparation may be performed in the presence of one or more suitable liquids.

The preparation comprises the steps of:
(a) combining at least one compound comprising at least one active hydrogen moiety and at least one fluorine substituent with water; and
(b) adding at least one compound comprising at least one aluminum alkyl moiety, wherein the at least one compound comprising at least one aluminum alkyl moiety is a trialkylaluminum.

The compound having at least one [Al-O-R] moiety may be prepared by combining a fluorophenol and water followed by addition of a trialkylaluminum. The compound having at least one [Al-O-R] moiety may be prepared by combining perfluorophenol and water followed by addition of a trialkylaluminum. The compound having at least one [Al-O-R] moiety may be prepared by combining perfluorophenol and water followed by addition of triisobutylaluminum.

The components may be combined at elevated temperature. The contact temperature may be greater than 20°C, or 30°C, or 40°C, or 50°C, or 60°C, or 70°C, or 80°C, or 90°C, or 100°C, or 110°C, or 120°C, or 130°C.

The contacting may be performed under an inert gaseous atmosphere, such as nitrogen.

The contact time may vary depending on one or more of the conditions, temperature and pressure, the type of mixing apparatus, the quantities of the components to be combined, and even the mechanism for introducing the materials.

The components may be combined for a period of time from about a second to about 24 hours, or from about 1 minute to about 12 hours, or from about 1 minute to about 5 hours, or from about 2 minutes to about 2 hours.

The activator compositions disclosed herein may also comprise a fluoroalkoxyalumoxane, fluoroaryloxyalumoxane or fluoroheteroaryloxyalumoxane of formula:

R₁ - (AlR₃O)ₘ - R₂

wherein R₁ and R₂ independently each occurrence is a C₁₋₄₀ aliphatic or aromatic group or a fluorinated derivative thereof or R₁ and R₂ together form a covalent bond;
wherein R₃ independently each occurrence is a monovalent, fluorinated alkoxy, aryloxy or heteroaryloxy group containing from 1 to 100 carbon atoms or R₁, with the proviso that in least one occurrence per molecule, R₃ is a monovalent fluorinated alkoxy, aryloxy or heteroaryloxy group containing from 1 to 100 carbon atoms; and
m is a number from 1 to 1000.

The fluoroaryloxy moiety may be a fluorophenoxy moiety such as a perfluorophenoxy moiety having from 1 to 5 fluorine substituents. The fluorophenoxy moiety may be pentafluorophenoxy. The fluoroalkoxy moiety may be a C₁-C₃₀ alkoxy moiety having one or more fluorine substituents. The fluoroalkoxy moiety may be trifluoromethoxy or pentafluoroethoxy.

The activator compositions comprising a fluoroalkoxyalumoxane, fluoroaryloxyalumoxane or fluoroheteroaryloxyalumoxane may be prepared by combining at least one compound comprising at least one aluminum alkyl moiety, at least one compound comprising at least one active hydrogen moiety and at least one fluorine substituent; and water.

The molar ratio of the at least one compound comprising at least one active hydrogen moiety and at least one fluorine substituent to the at least one compound comprising at least one aluminum alkyl moiety may be from about 1:10 to about 10:1, or from about 1:5to about 5:1, or from about 1:2 to about 2:1.

The molar ratio of the at least one compound comprising at least one aluminum alkyl moiety to water may be from about 1:10 to about 10:1, or from about 1:5 to about 5:1, or from about 1:2 to about 2:1.

The preparation may be performed in the presence of one or more suitable liquids.

The preparation comprises the steps of:
(a) combining at least one compound comprising at least one active hydrogen moiety and at least one fluorine substituent with water; and
(b) adding at least one compound comprising at least one aluminum alkyl moiety, wherein the at least one compound comprising at least one aluminum alkyl moiety is a trialkylaluminum.

The activator compositions comprising a fluoroaryloxyalumoxane may be prepared by combining a fluorophenol and water followed by addition of a trialkylaluminum. The activator compositions comprising a fluoroaryloxyalumoxane may be prepared by combining perfluorophenol and water followed by addition of a trialkylaluminum. The activator compositions comprising a fluoroaryloxyalumoxane may be prepared by combining perfluorophenol and water followed by addition of triisobutylaluminum.

The components may be combined at elevated temperature. The contact temperature may be greater than 20°C, or 30°C, or 40°C, or 50°C, or 60°C, or 70°C, or 80°C, or 90°C, or 100°C, or 110°C, or 120°C, or 130°C.

The contacting may be performed under an inert gaseous atmosphere, such as nitrogen.

The contact time may vary depending on one or more of the conditions, temperature and pressure, the type of mixing apparatus, the quantities of the components to be combined, and even the mechanism for introducing the materials.

The components may be combined for a period of time from about a second to about 24 hours, or from about 1 minute to about 12 hours, or from about 1 minute to about 5 hours, or from about 2 minutes to about 2 hours.

### Supports

The above described activator compositions may be combined with one or more supports using one of the support methods well known in the art or as described below. For example, the activator compositions may be used in a supported form, such as, deposited on, contacted with, or incorporated within, adsorbed or absorbed in, or on the support. The activator compositions may be chemically bonded to the support or physically mixed with the support.

As used herein, the term "support" refers to compounds comprising Group 2, 3, 4, 5, 13 and 14 oxides and chlorides. Suitable supports include, for example, silica, magnesia, titania, zirconia, montmorillonite, phyllosilicate, alumina, silica-alumina, silica-chromium, silica-titania, magnesium chloride, graphite, magnesia, titania, zirconia, montmorillonite and phyllosilicate.

The support may possess an average particle size in the range of from about 0.1 to about 500 µm, or from about 1 to about 200 µm, or from about 1 to about 50 µm, or from about 5 to about 50 µm.

The support may have an average pore size in the range of from about 10 to about 1000 A, or about 50 to about 500 A, or 75 to about 350 A.

The support may have a surface area in the range of from about 10 to about 700 m²/g, or from about 50 to about 500 m²/g, or from about 100 to about 400 m²/g.

The support may have a pore volume in the range of from about 0.1 to about 4.0 cc/g, or from about 0.5 to about 3.5 cc/g, or from about 0.8 to about 3.0 cc/g.

The support, such as an inorganic oxide, may have a surface area in the range of from about 10 to about 700 m²/g, a pore volume in the range of from about 0.1 to about 4.0 cc/g, and an average particle size in the range of from about 1 to about 500 µm. Alternatively, the support may have a surface area in the range of from about 50 to about 500 m²/g, a pore volume of from about 0.5 to about 3.5 cc/g, and an average particle size of from about 10 to about 200 µm. The surface area of the support may be in the range from about 100 to about 400 m²/g, a pore volume of from about 0.8 to about 3.0 cc/g and an average particle size of from about 5 to about 100 µm.

The support may be treated at elevated temperature so as to reduce the water content and/or to reduce the concentration of surface functionalities such as surface hydroxyls. The support may be treated at or above 100°C, at or above 200°C, at or above 300°C, at or above 400°C, at or above 500°C, at or above 600°C, at or above 700°C or at or above 800°C. The time period for elevated temperature treatment is well known to those skilled in the art.

### Supported Activator Compositions

The activator compositions as described herein may further comprise a support as hereinbefore described so as to produce a supported activator composition. The support may be a particulate inorganic or particulate organic material.

The particulate inorganic or particulate inorganic material may be treated with one or more compounds by reaction with a silane, a trialkylaluminum, or similar reactive compound so as to fully or partially react any residual surface species, such as surface hydroxyls. The aluminum alkyl may be trimethylaluminum, triethylaluminum or triisobutylaluminum. Silica may be reacted with a tri(C₁₋₁₀alkyl)aluminum, for example triethylaluminum, triisopropylaluminum or triisobutylaluminum, in an amount from 0.1 to 100, or 0.2 to 10 mmole aluminum/g silica, and thereafter contacted with the activator composition, or a solution thereof, in a quantity sufficient to provide a supported activator composition.

The support may be treated at elevated temperature so as to reduce the water content and/or to reduce the concentration of surface functionalities such as surface hydroxyls. The support may be treated at or above 100°C, at or above 200°C, at or above 300°C, at or above 400°C, at or above 500°C, at or above 600°C, at or above 700°C or at or above 800°C.

The support may be treated with one or more compounds so as to fully or partially react any residual surface species after elevated temperature treatment.

The ratio of activator composition to particulate support may be such as to give an aluminum loading on the support from about 0.1 mmol Al/g to about 10 mmol Al/g, or from about 0.2 mmol Al/g to about 5 mmol Al/g, or from about 0.5 mmol Al/g to about 5 mmol Al/g.

The supported activator composition may be prepared by a method comprising the step of combining, in any order, at least one support, at least one compound comprising at least one aluminum alkyl moiety, at least one compound comprising at least one active hydrogen moiety and at least one fluorine substituent; and water.

The method may be performed in the presence of one or more suitable liquids.

The method may comprise the steps of:
(a) combining at least one compound comprising at least one active hydrogen moiety and at least one fluorine substituent with water;
(b) combining (a) with at least one compound comprising at least one aluminum alkyl moiety; and
(c) combining (b) with at the least one support.

The method may be performed by combining in any order a trialkylaluminum, a fluorophenol and water, followed by addition of a support. The method may be performed by combining in any order a trialkylaluminum, perfluorophenol and water, followed by addition of a support. The method may be performed by combining in any order triisobutylaluminum, perfluorophenol and water followed by addition of a support. The support may be a calcined support, that is, treated at elevated temperature as hereinbefore described.

The method may be performed by combining a fluorophenol and water followed by addition of a trialkylaluminum and subsequently followed by addition of a support. The method may be performed by combining perfluorophenol and water followed by addition of a trialkylaluminum and subsequently followed by addition of a support. The method may be performed by combining perfluorophenol and water followed by addition of triisobutylaluminum and subsequently followed by addition of a support. The support may be a calcined support, that is, treated at elevated temperature as hereinbefore described.

A supported activator composition may also be prepared by combining at least one compound having at least one [Al-O-R] moiety wherein R is an organic moiety having up to 100 non-hydrogen atoms and wherein R comprises at least one fluorine substituent and a support.

In the compound having at least one [Al-O-R] moiety -O-R may be a fluoroaryloxy moiety, a substituted fluoroaryloxy moiety, a fluoroheteroaryloxy moiety, a substituted fluoroheteroaryloxy moiety a fluorohydrocarbyloxy moiety or a substituted fluorohydrocarbyloxy moiety.

The fluoroaryloxy moiety may be a fluorophenoxy moiety such as a perfluorophenoxy moiety having from 1 to 5 fluorine substituents. The fluorophenoxy moiety may be pentafluorophenoxy. The fluorohydrocarbyloxy moiety may be a fluoroalkoxy moiety such as a C₁-C₃₀ alkoxy moiety having one or more fluorine substituents. The fluoroalkoxy moiety may be trifluoromethoxy or pentafluoroethoxy.

In the compound having at least one [Al-O-R] moiety -O-R may be hydrocarbyloxy or aryloxy or heteroaryloxy moiety which themselves are substituted with one or more fluorine containing substituents. For example -O-R may be an aryloxy moiety having one or more trifluoromethyl substituents.

The compound having at least one [Al-O-R] moiety may comprise two or more aluminum atoms.

The support may be a particulate inorganic or particulate organic material. The particulate inorganic material may be a particulate inorganic oxide. The particulate inorganic oxide may be a particulate silica or a particulate alumina. The support may be a calcined support, that is, treated at elevated temperature as hereinbefore described.

The methods may further comprise the step of drying the supported activator composition formed to provide a substantially dry and/or free flowing powder.

The components may be combined at elevated temperature. The contact temperature may be greater than 20°C, or 30°C, or 40°C, or 50°C, or 60°C, or 70°C, or 80°C, or 90°C, or 100°C, or 110°C, or 120°C, or 130°C.

The contacting may be performed under an inert gaseous atmosphere, such as nitrogen.

The contact time may vary depending on one or more of the conditions, temperature and pressure, the type of mixing apparatus, the quantities of the components to be combined, and even the mechanism for introducing the materials.

The components may be combined for a period of time from about a second to about 24 hours, or from about 1 minute to about 12 hours, or from about 1 minute to about 5 hours, or from about 2 minutes to about 2 hours.

A supported activator composition may also be prepared by combining a fluoroalkoxyalumoxane, fluoroaryloxyalumoxane or fluoroheteroaryloxyalumoxane of formula:

R₁ - (AlR₃O)ₘ - R₂

wherein R₁ and R₂ independently each occurrence is a C₁₋₄₀ aliphatic or aromatic group or a fluorinated derivative thereof or R₁ and R₂ together form a covalent bond;
wherein R₃ independently each occurrence is a monovalent, fluorinated alkoxy, aryloxy or heteroaryloxy group containing from 1 to 100 carbon atoms or R₁, with the proviso that in least one occurrence per molecule, R₃ is a monovalent fluorinated alkoxy, aryloxy or heteroaryloxy group containing from 1 to 100 carbon atoms; and
m is a number from 1 to 1000, with a support.

The support may be a particulate inorganic or particulate organic material. The particulate inorganic material may be a particulate inorganic oxide. The particulate inorganic oxide may be a particulate silica or a particulate alumina. The support may be a calcined support, that is, treated at elevated temperature as hereinbefore described.

The methods may further comprise the step of drying the supported activator composition formed to provide a substantially dry and/or free flowing powder.

The components may be combined at elevated temperature. The contact temperature may be greater than 20°C, or 30°C, or 40°C, or 50°C, or 60°C, or 70°C, or 80°C, or 90°C, or 100°C, or 110°C, or 120°C, or 130°C.

The contacting may be performed under an inert gaseous atmosphere, such as nitrogen.

The contact time may vary depending on one or more of the conditions, temperature and pressure, the type of mixing apparatus, the quantities of the components to be combined, and even the mechanism for introducing the materials.

The components may be combined for a period of time from about a second to about 24 hours, or from about 1 minute to about 12 hours, or from about 1 minute to about 5 hours, or from about 2 minutes to about 2 hours.

### Catalysts

Any catalyst compound or combination of catalyst compounds utilized to polymerize olefins is suitable for use with the activator compositions or supported activator compositions of the present disclosure. The following is a discussion of various catalysts set forth for the purpose of explanation.

### General Definitions

As used herein, a "catalyst compound" may include any compound that, when activated, is capable of catalyzing the polymerization or oligomerization of olefins, wherein the catalyst compound comprises at least one Group 3 to 12 atom, and optionally at least one leaving group bound thereto.

As used herein, a "catalyst composition" includes one or more catalyst compounds utilized to polymerize olefins and also includes at least one activator composition or alternatively, at least one cocatalyst composition as disclosed herein. A "supported catalyst composition" also includes supports. The catalyst composition may include any suitable number of catalyst compounds in any combination as described herein, as well as any activator composition or cocatalyst composition in any combination as described herein. A "catalyst composition" may also contain one or more additional components or additives known in the art, for example additives to reduce or eliminate reactor fouling, such as continuity additives. The supported catalyst composition may include any suitable number of catalyst compounds in any combination as described herein, as well as any supported activator composition or supported cocatalyst composition in any combination as described herein. A "supported catalyst composition" may also contain one or more additional components or additives known in the art, for example additives to reduce or eliminate reactor fouling, such as continuity additives.

### Conventional Catalysts

Conventional catalysts are those traditional Ziegler-Natta catalysts and Phillips-type chromium catalyst well known in the art. Examples of conventional-type transition metal catalysts are disclosed in U.S. Pat. Nos. 4, 115,639, 4,077,904 4,482,687, 4,564,605, 4,721,763, 4,879,359 and 4,960,741. The conventional-type transition metal catalyst compounds that may be used in the present invention include transition metal compounds from Groups III to VIII of the Periodic Table of the Elements.

These conventional-type transition metal catalysts may be represented by the formula: MRₓ, where M is a metal from Groups IIIB to VIII, preferably Group IVB, more preferably titanium; R is a halogen or a hydrocarbyloxy group; and x is the valence of the metal M. Non- limiting examples of R may include alkoxy, phenoxy, bromide, chloride and fluoride. Conventional-type transition metal catalysts where M is titanium may include TiCl₄, TiBr₄, Ti(OC₂H₅)₃Cl, Ti(OC₂H₅)Cl₃, Ti(OC₄H₉)₃Cl, Ti(OC₃H₇)₂Cl₂, Ti(OC₂H₅)₂Br₂, TiCl₃.1/3AlCl₃ and Ti(OC₁₂H₂₅)Cl₃.

Conventional-type transition metal catalyst compounds based on magnesium/titanium electron-donor complexes that are useful in the invention are described in, for example, U.S. Pat. Nos. 4,302,565 and 4,302,566. The MgTiCl₆(ethyl acetate)₄ derivative is one such example. British Patent Application 2,105,355 describes various conventional-type vanadium catalyst compounds. Examples of conventional-type vanadium catalyst compounds include vanadyl trihalide, alkoxy halides and alkoxides such as VOCl₃, VOCl₂(OBu) where Bu=butyl and VO(OC₂H₅)₃; vanadium tetra-halide and vanadium alkoxy halides such as VCl₄ and VCl₃(OBu); vanadium and vanadyl acetyl acetonates and chloroacetyl acetonates such as V(AcAc)₃ and VOCl₂(AcAc) where (AcAc) is an acetyl acetonate. Examples of conventional- type vanadium catalyst compounds are VOCl₃, VCl₄ and VOCl₂--OR where R is a hydrocarbon radical, preferably a C₁ to C₁₀ aliphatic or aromatic hydrocarbon radical such as ethyl, phenyl, isopropyl, butyl, propyl, n-butyl, iso-butyl, tertiarybutyl, hexyl, cyclohexyl, naphthyl, and vanadium acetyl acetonates.

Conventional-type chromium catalyst compounds, often referred to as Phillips-type catalysts, suitable for use in the present invention may include CrO₃, chromocene, silyl chromate, chromyl chloride (CrO₂Cl₂), chromium-2-ethyl-hexanoate and chromium acetylacetonate (Cr(AcAc)₃). Examples are disclosed in, for example, U.S. Pat. Nos. 3,242,099 and 3,231,550.

Still other conventional-type transition metal catalyst compounds and catalyst systems suitable for use in the present invention are disclosed in U.S. Pat. Nos. 4,124,532, 4,302,565, 4,302,566 and 5,763,723 and published EP-A2 0 416 815 A2 and EP-A1 0 420 436. The conventional-type transition metal catalysts of the invention may also have the general formula M'₁M"X₂ₜYᵤE, where M' is Mg, Mn and/or Ca; t is a number from 0.5 to 2; M" is a transition metal Ti, V and/or Zr; X is a halogen, preferably Cl, Br or I; Y may be the same or different and is halogen, alone or in combination with oxygen, -NR₂,-OR, -SR, -COOR, or- OSOOR, where R is a hydrocarbyl radical, in particular an alkyl, aryl, cycloalkyl or arylalkyl radical, acetylacetonate anion in an amount that satisfies the valence state of M'; u is a number from 0.5 to 20; E is an electron donor compound selected from the following classes of compounds: (a) esters of organic carboxylic acids; (b) alcohols; (c) ethers; (d) amines; (e) esters of carbonic acid; (f) nitriles; (g) phosphoramides, (h) esters of phosphoric and phosphorus acid, and (j) phosphorus oxy-chloride. Examples of complexes satisfying the above formula include: MgTiCl₅.2CH₃COOC₂H₅, M₉₃Ti₂Cl₁₂7CH₃COOC₂H₅, MgTiCl₅.6C₂H₅OH, MgTiCl₅.100CH₃OH, MgTiCl₅ tetrahydrofuran, MgTi₂Cl₁₂7C₆H₅CN, MgTi₂Cl₁₂6C₆H₅COOC₂H₅, MgTiCl₆2CH₃COOC₂H₅, MgTiCl₆6C₅H₅N, MgTiCl₅(OCH₃)2CH₃COOC₂H₅, MgTiCl₅N(C₆H₅)₂3CH₃COOC₂H₅, MgTiBr₂Cl₄2(C₂H₅)O, MnTiCl₅4C₂H₅OH, Mg₃V₂Cl₂.7CH₃COOC₂H₅, MgZrCl₆4tetrahydrofuran. Other catalysts may include cationic catalysts such as AlCl₃, and other cobalt and iron catalysts well known in the art.

The conventional-type transition metal catalyst compounds disclosed herein may be activated with one or more of the activator compositions or supported activator compositions disclosed herein. The conventional-type transition metal catalyst compounds disclosed herein may also be activated with one or more of the activator compositions or supported activator compositions disclosed herein in combination with one or more of the conventional cocatalysts described below.

### Conventional Cocatalysts and Other Components

Conventional-type cocatalyst compounds for the above conventional-type transition metal catalyst compounds may be represented by the formula M³M⁴_{V}X²_{C}R_{b-c}, wherein M³ is a metal from Group IA, IIA, IIB and IIIA of the Periodic Table of Elements; M⁴ is a metal of Group IA of the Periodic Table of Elements; v is a number from 0 to 1 ; each X² is any halogen; c is a number from 0 to 3; each R³ is a monovalent hydrocarbon radical or hydrogen; b is a number from 1 to 4; and wherein b minus c is at least 1. Other conventional-type organometallic cocatalyst compounds for the above conventional-type transition metal catalysts have the formula M³R³k, where M³ is a Group IA, IIA, IIB or IIIA metal, such as lithium, sodium, beryllium, barium, boron, aluminum, zinc, cadmium, and gallium; k equals 1, 2 or 3 depending upon the valency of M³ which valency in turn normally depends upon the particular Group to which M³ belongs; and each R³ may be any monovalent hydrocarbon radical.

Examples of conventional-type organometallic cocatalyst compounds of Group IA, IIA and IIIA useful with the conventional-type catalyst compounds described above include methyllithium, butyllithium, dihexylmercury, butylmagnesium, diethylcadmium, benzylpotassium, diethylzinc, tri-n-butylaluminum, diisobutyl ethylboron, diethylcadmium, din-butylzinc and tri-n-amylboron, and, in particular, the aluminum alkyls, such as tri-hexyl-aluminum, triethylaluminum, trimethylaluminum, and tri-isobutylaluminum. Other conventional-type cocatalyst compounds may include mono-organohalides and hydrides of Group IIA metals, and mono- or di-organohalides and hydrides of Group IHA metals. Non-limiting examples of such conventional-type cocatalyst compounds may include di-isobutylaluminum bromide, isobutylboron dichloride, methyl magnesium chloride, ethylberyllium chloride, ethylcalcium bromide, di-isobutylaluminum hydride, methylcadmium hydride, diethylboron hydride, hexylberyllium hydride, dipropylboron hydride, octylmagnesium hydride, butylzinc hydride, dichloroboron hydride, di-bromo-aluminum hydride and bromocadmium hydride. Conventional-type organometallic cocatalyst compounds are known to those in the art and a more complete discussion of these compounds may be found in U.S. Pat. Nos. 3,221,002 and 5,093,415.

### Metallocene Catalysts

Metallocene catalysts may include "half sandwich," (i.e., at least one ligand) and "full sandwich," (i.e., at least two ligands) compounds having one or more Cp ligands (cyclopentadienyl and ligands isolobal to cyclopentadienyl) bound to at least one Group 3 to Group 12 metal atom, and one or more leaving group(s) bound to the at least one metal atom. Hereinafter, these compounds will be referred to as "metallocene(s)" or "metallocene catalyst component(s)."

The one or more metallocene catalyst components may be represented by the formula (I):

Cp^{A}Cp^{B}MXₓ (I)

The metal atom "M" of the metallocene catalyst compound, as described throughout the specification and claims, may be selected from the group consisting of Groups 3 through 12 atoms and lanthanide Group atoms; selected from the group consisting of Groups 4, 5 and 6 atoms; Ti, Zr, Hf atoms, or Zr. The groups bound the metal atom "M" are such that the compounds described below in the formulas and structures are neutral, unless otherwise indicated. The Cp ligand(s) form at least one chemical bond with the metal atom M to form the "metallocene catalyst compound". The Cp ligands are distinct from the leaving groups bound to the catalyst compound in that they are not highly susceptible to substitution/abstraction reactions.

M is as described above; each X is chemically bonded to M; each Cp group is chemically bonded to M; and n is 0 or an integer from 1 to 4, or either 1 or 2.

The ligands represented by Cp^{A} and Cp^{B} in formula (I) may be the same or different cyclopentadienyl ligands or ligands isolobal to cyclopentadienyl, either or both of which may contain heteroatoms and either or both of which may be substituted by a group R. Cp^{A} and Cp^{B} may be independently selected from the group consisting of cyclopentadienyl, indenyl, tetrahydroindenyl, fluorenyl, and substituted derivatives of each.

Independently, each Cp^{A} and Cp^{B} of formula (I) may be unsubstituted or substituted with any one or combination of substituent groups R. Examples of substituent groups R as used in structure (I) include hydrogen radicals, hydrocarbyls, lower hydrocarbyls, substituted hydrocarbyls, heterohydrocarbyls, alkyls, lower alkyls, substituted alkyls, heteroalkyls, alkenyls, lower alkenyls, substituted alkenyls, heteroalkenyls, alkynyls, lower alkynyls, substituted alkynyls, heteroalkynyls, alkoxys, lower alkoxys, aryloxys, hydroxyls, alkylthios, lower alkyls thios, arylthios, thioxys, aryls, substituted aryls, heteroaryls, aralkyls, aralkylenes, alkaryls, alkarylenes, halides, haloalkyls, haloalkenyls, haloalkynyls, heteroalkyls, heterocycles, heteroaryls, heteroatom-containing groups, silyls, boryls, phosphinos, phosphines, aminos, amines, cycloalkyls, acyls, aroyls, alkylthiols, dialkylamines, alkylamidos, alkoxycarbonyls, aryloxycarbonyls, carbamoyls, alkyl- and dialkyl-carbamoyls, acyloxys, acylaminos, aroylaminos, and combinations thereof.

More particular examples of alkyl substituents R associated with formula (i) include methyl, ethyl, propyl, butyl, pentyl, hexyl, cyclopentyl, cyclohexyl, benzyl, phenyl, methylphenyl, and tert-butylphenyl groups, including all their isomers, for example tertiarybutyl and isopropyl. Other possible radicals include substituted alkyls and aryls such as, for example, fluoromethyl, fluroethyl, difluroethyl, iodopropyl, bromohexyl, chlorobenzyl and hydrocarbyl substituted organometalloid radicals including trimethylsilyl, trimethylgermyl and methyldiethylsilyl; and halocarbyl-substituted organometalloid radicals including tris(trifluoromethyl)silyl, methylbis(difluoromethyl)silyl and bromomethyldimethylgermyl; and disubstituted boron radicals including dimethylboron for example; and disubstituted Group 15 radicals including dimethylamine, dimethylphosphine, diphenylamine, methylphenylphosphine, Group 16 radicals including methoxy, ethoxy, propoxy, phenoxy, methylsulfide and ethylsulfide. Other substituents R include olefins such as olefinically unsaturated substituents including vinyl- terminated ligands, for example 3-butenyl, 2-propenyl and 5-hexenyl. Two adjacent R groups, when present, may be joined to form a ring structure having from 3 to 30 atoms selected from the group consisting of carbon, nitrogen, oxygen, phosphorous, silicon, germanium, aluminum, boron and combinations thereof. Also, a substituent group R group such as 1-butanyl may form a bonding association to the element M.

Each X in formula (I) may be independently selected from the group consisting of: any leaving group, for example, halogen ions, hydrides, hydrocarbyls, lower hydrocarbyls, substituted hydrocarbyls, heterohydrocarbyls, alkyls, lower alkyls, substituted alkyls, heteroalkyls, alkenyls, lower alkenyls, substituted alkenyls, heteroalkenyls, alkynyls, lower alkynyls, substituted alkynyls, heteroalkynyls, alkoxys, lower alkoxys, aryloxys, hydroxyls, alkylthios, lower alkyls thios, arylthios, thioxys, aryls, substituted aryls, heteroaryls, aralkyls, aralkylenes, alkaryls, alkarylenes, halides, haloalkyls, haloalkenyls, haloalkynyls, heteroalkyls, heterocycles, heteroaryls, heteroatom-containing groups, silyls, boryls, phosphinos, phosphines, aminos, amines, cycloalkyls, acyls, aroyls, alkylthiols, dialkylamines, alkylamidos, alkoxycarbonyls, aryloxycarbonyls, carbomoyls, alkyl- and dialkyl-carbamoyls, acyloxys, acylaminos, aroylaminos, and combinations thereof. X may also be C₁ to C₁₂ alkyls, C₂ to C₁₂ alkenyls, C₆ to C₁₂aryls, C₇ to C₂₀ alkylaryls, C₁ to C₁₂ alkoxys, C₆ to C₁₆ aryloxys, C₇ to C₁₈ alkylaryloxys, C₁ to C₁₂ fluoroalkyls, C₆ to C₁₂ fluoroaryls, and C₁ to C₁₂ heteroatom-containing hydrocarbons, and substituted derivatives thereof. X may also be selected from hydride, halogen ions, C₁ to C₆ alkyls, C₂ to C₆ alkenyls, C₇ to C₁₈ alkylaryls, C₁ to C₆ alkoxys, C₆ to C₁₄ aryloxys, C₇ to C₁₆alkylaryloxys, C₁ to C₆ alkylcarboxylates, C₁ to C₆ fluorinated alkylcarboxylates, C₆ to C₁₂arylcarboxylates, C₇ to C₁₈alkylarylcarboxylates, C₁ to C₆ fluoroalkyls, C₂ to C₆ fluoroalkenyls, and C₇ to C₁₈ fluoroalkylaryls. X may also be selected from hydride, chloride, fluoride, methyl, phenyl, phenoxy, benzoxy, tosyl, fluoromethyls and fluorophenyl. X may be selected from C₁ to C₁₂alkyls, C₂ to C₁₂alkenyls, C₆ to C₁₂aryls, C₇ to C₂₀alkylaryls, substituted C₁ to C₁₂alkyls, substituted C₆ to C₁₂aryls, substituted C₇ to C₂₀alkylaryls and C₁ to C₁₂heteroatom-containing alkyls, C₁ to C₁₂ heteroatom-containing aryls and C₁ to C₁₂ heteroatom-containing alkylaryls; chloride, fluoride, C₁ to C₆ alkyls, C₂ to C₆ alkenyls, C₇ to C₁₈ alkylaryls, halogenated C₁ to C₆ alkyls, halogenated C₂ to C₆ alkenyls, and halogenated C₇ to C₁₈ alkylaryls. X may be selected from fluoride, methyl, ethyl, propyl, phenyl, methylphenyl, dimethylphenyl, trimethylphenyl, fluoromethyls (mono-, di- and trifluoromethyls) and fluorophenyls (mono-, di-, tri-, tetra- and pentafluorophenyls).

The metallocene catalyst compound and/or component may include those of formula (I) where Cp^{A} and Cp^{B} are bridged to each other by at least one bridging group, (A), such that the structure is represented by formula (II):

Cp^{A}(A)Cp^{B}MXn (II)

These bridged compounds represented by formula (II) are known as "bridged metallocenes". Cp^{A}, Cp^{B}, M, X and n are as defined above for formula (I); and wherein each Cp ligand is chemically bonded to M, and (A) is chemically bonded to each Cp. Examples of bridging group (A) include divalent alkyls, divalent lower alkyls, divalent substituted alkyls, divalent heteroalkyls, divalent alkenyls, divalent lower alkenyls, divalent substituted alkenyls, divalent heteroalkenyls, divalent alkynyls, divalent lower alkynyls, divalent substituted alkynyls, divalent heteroalkynyls, divalent alkoxys, divalent lower alkoxys, divalent aryloxys, divalent alkylthios, divalent lower alkyl thios, divalent arylthios, divalent aryls, divalent substituted aryls, divalent heteroaryls, divalent aralkyls, divalent aralkylenes, divalent alkaryls, divalent alkarylenes, divalent haloalkyls, divalent haloalkenyls, divalent haloalkynyls, divalent heteroalkyls, divalent heterocycles, divalent heteroaryls, divalent heteroatom-containing groups, divalent hydrocarbyls, divalent lower hydrocarbyls, divalent substituted hydrocarbyls, divalent heterohydrocarbyls, divalent silyls, divalent boryls, divalent phosphinos, divalent phosphines, divalent aminos, divalent amines, divalent ethers, divalent thioethers. Additional examples of bridging group A include divalent hydrocarbon groups containing at least one Group 13 to 16 atom, such as at least one of a carbon, oxygen, nitrogen, silicon, aluminum, boron, germanium and tin atom and combinations thereof; wherein the heteroatom may also be C₁ to C₁₂ alkyl or aryl substituted to satisfy neutral valency. The bridging group (A) may also contain substituent groups R as defined above for formula (I) including halogen radicals and iron. More particular non-limiting examples of bridging group (A) are represented by C₁ to C₆ alkylenes, substituted C₁ to C₆ alkylenes, oxygen, sulfur, R'₂C=, R'₂Si=,- Si(R')₂Si(R'₂)- , R'₂Ge=, R'P= (wherein '= " represents two chemical bonds), where R' is independently selected from the group consisting of hydride, hydrocarbyl, substituted hydrocarbyl, halocarbyl, substituted halocarbyl, hydrocarbyl-substituted organometalloid, halocarbyl-substituted organometalloid, disubstituted boron, disubstituted Group 15 atoms, substituted Group 16 atoms, and halogen radical; and wherein two or more R' may be joined to form a ring or ring system. The bridged metallocene catalyst component of formula (II) may have two or more bridging groups (A).

Other examples of bridging group (A) include methylene, ethylene, ethylidene, propylidene, isopropylidene, diphenylmethylene, 1 ,2-dimethylethylene, 1 ,2-diphenylethylene, 1, 1,2,2-tetramethylethylene, dimethyls ilyl, diethylsilyl, methyl-ethylsilyl, trifluoromethylbutylsilyl, bis(trifluoromethyl)silyl, di(n-butyl)silyl, di(n-propyl)silyl, di(i-propyl)silyl, di(n-hexyl)silyl, dicyclohexylsilyl, diphenylsilyl, cyclohexylphenylsilyl, t-butylcyclohexylsilyl, di(t-butylphenyl)silyl, di(p-tolyl)silyl and the corresponding moieties wherein the Si atom is replaced by a Ge or a C atom; dimethyls ilyl, diethylsilyl, dimethylgermyl and diethylgermyl.

The bridging group (A) may also be cyclic, comprising, for example 4 to 10, 5 to 7 ring members. The ring members may be selected from the elements mentioned above, from one or more of B, C, Si, Ge, N and O. Examples of ring structures which may be present as or part of the bridging moiety are cyclobutylidene, cyclopentylidene, cyclohexylidene, cycloheptylidene, cyclooctylidene and the corresponding rings where one or two carbon atoms are replaced by at least one of Si, Ge, N and O, in particular, Si and Ge. The bonding arrangement between the ring and the Cp groups may be either cis-, trans-, or a combination.

The cyclic bridging groups (A) may be saturated or unsaturated and/or carry one or more substituents and/or be fused to one or more other ring structures. If present, the one or more substituents may be selected from the group consisting of hydrocarbyl (e.g., alkyl such as methyl) and halogen (e.g., F, CI). The one or more Cp groups which the above cyclic bridging moieties may optionally be fused to may be saturated or unsaturated and are selected from the group consisting of those having 4 to 10, more particularly 5, 6 or 7 ring members (selected from the group consisting of C, N, O and S) such as, for example, cyclopentyl, cyclohexyl and phenyl. Moreover, these ring structures may themselves be fused such as, for example, in the case of a naphthyl group. Moreover, these (optionally fused) ring structures may carry one or more substituents. Illustrative examples of these substituents are hydrocarbyl (particularly alkyl) groups and halogen atoms.

The ligands Cp^{A} and Cp^{B} of formula (I) and (II) may be different from each other or the same as each other.

The metallocene catalyst components may include mono-ligand metallocene compounds (e.g., mono cyclopentadienyl catalyst components) such as described in WO 93/08221 for example.

The at least one metallocene catalyst component may be an unbridged "half sandwich" metallocene represented by the formula (IV):

Cp^{A}MQ_{qXn} (IV)

wherein Cp^{A} is defined as for the Cp groups in (I) and is a ligand that is bonded to M; each Q is independently bonded to M; Q is also bound to Cp^{A}; X is a leaving group as described above in (I); n ranges from 0 to 3, or is 1 or 2; q ranges from 0 to 3, or is 1 or 2. Cp^{A} may be selected from the group consisting of cyclopentadienyl, indenyl, tetrahydroindenyl, fluorenyl, substituted version thereof, and combinations thereof.

In formula (IV), Q is selected from the group consisting of ROO⁻, RO-, R(O)-, -NR-,-CR₂-, -S-, -NR₂, -CR₃, -SR, -SiR₃, -PR₂, -H, and substituted and unsubstituted aryl groups, wherein R is selected from the group consisting of hydrocarbyls, lower hydrocarbyls, substituted hydrocarbyls, heterohydrocarbyls, alkyls, lower alkyls, substituted alkyls, heteroalkyls, alkenyls, lower alkenyls, substituted alkenyls, heteroalkenyls, alkynyls, lower alkynyls, substituted alkynyls, heteroalkynyls, alkoxys, lower alkoxys, aryloxys, hydroxyls, alkylthios, lower alkyls thios, arylthios, thioxys, aryls, substituted aryls, heteroaryls, aralkyls, aralkylenes, alkaryls, alkarylenes, halides, haloalkyls, haloalkenyls, haloalkynyls, heteroalkyls, heterocycles, heteroaryls, heteroatom-containing groups, silyls, boryls, phosphinos, phosphines, aminos, amines, cycloalkyls, acyls, aroyls, alkylthiols, dialkylamines, alkylamidos, alkoxycarbonyls, aryloxycarbonyls, carbamoyls, alkyl- and dialkyl-carbamoyls, acyloxys, acylaminos, aroylaminos, and combinations thereof. R may be selected from C₁ to C₆ alkyls, C₆ to C₁₂ aryls, C₁ to C₆ alkylamines, C₆ to C₁₂ alkylarylamines, C₁ to C₆ alkoxys, and C₆ to C₁₂ aryloxys. Examples of Q include C₁ to C₁₂ carbamates, C₁ to C₁₂ carboxylates (e.g., pivalate), C₂ to C₂₀ allyls, and C₂ to C₂₀ heteroallyl moieties.

Described another way, the "half sandwich" metallocenes above can be described as in formula (II), such as described in, for example, US 6,069,213 :

Cp^{A}M(Q₂GZ)Xₙ or T(Cp^{A}M(Q₂GZ)Xₙ)ₘ (V)

wherein M, Cp^{A}, X and n are as defined above;
Q₂GZ forms a polydentate ligand unit (e.g., pivalate), wherein at least one of the Q groups form a bond with M, and is defined such that each Q is independently selected from the group consisting of -O-, -NR-, -CR₂- and -S-; G is either carbon or silicon; and Z is selected from the group consisting of R, -OR, -NR₂, -CR₃, -SR, -SiR₃, -PR₂, and hydride, providing that when Q is -NR-, then Z is selected from the group consisting of -OR, -NR₂, -SR, -SiR₃,-PR₂; and provided that neutral valency for Q is satisfied by Z; and wherein each R is independently selected from the group consisting of hydrocarbyls, lower hydrocarbyls, substituted hydrocarbyls, heterohydrocarbyls, alkyls, lower alkyls, substituted alkyls, heteroalkyls, alkenyls, lower alkenyls, substituted alkenyls, heteroalkenyls, alkynyls, lower alkynyls, substituted alkynyls, heteroalkynyls, alkoxys, lower alkoxys, aryloxys, hydroxyls, alkylthios, lower alkyls thios, arylthios, thioxys, aryls, substituted aryls, heteroaryls, aralkyls, aralkylenes, alkaryls, alkarylenes, halides, haloalkyls, haloalkenyls, haloalkynyls, heteroalkyls, heterocycles, heteroaryls, heteroatom-containing groups, silyls, boryls, phosphinos, phosphines, aminos, amines, cycloalkyls, acyls, aroyls, alkylthiols, dialkylamines, alkylamidos, alkoxycarbonyls, aryloxycarbonyls, carbamoyls, alkyl- and dialkyl-carbamoyls, acyloxys, acylaminos, aroylaminos, and combinations thereof. R may be selected from the group consisting of C₁ to C₁₀heteroatom containing groups, C₁ to C₁₀ alkyls, C₆ to C₁₂ aryls, C₆ to C₁₂ alkylaryls, C₁ to C₁₀ alkoxys, and C₆ to C₁₂ aryloxys;
   n may be 1 or 2;
   T is a bridging group selected from the group consisting of C₁ to C₁₀ alkylenes, C₆ to C₁₂ arylenes and C₁ to C₁₀ heteroatom containing groups, and C₆ to C₁₂ heterocyclic groups; wherein each T group bridges adjacent "Cp^{A}M(Q₂GZ)Xₙ" groups, and is chemically bonded to the Cp^{A} groups;
m may be an integer from 1 to 7; or m may be an integer from 2 to 6.

The metallocene catalyst component may be described more particularly in structures (VIa), (VIb), (VIc), (VId), (VIe), and (VIf): 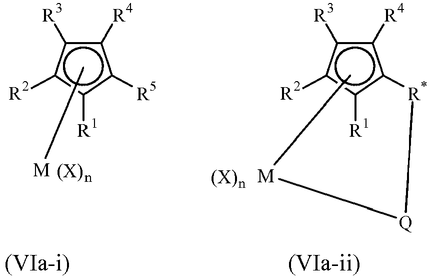 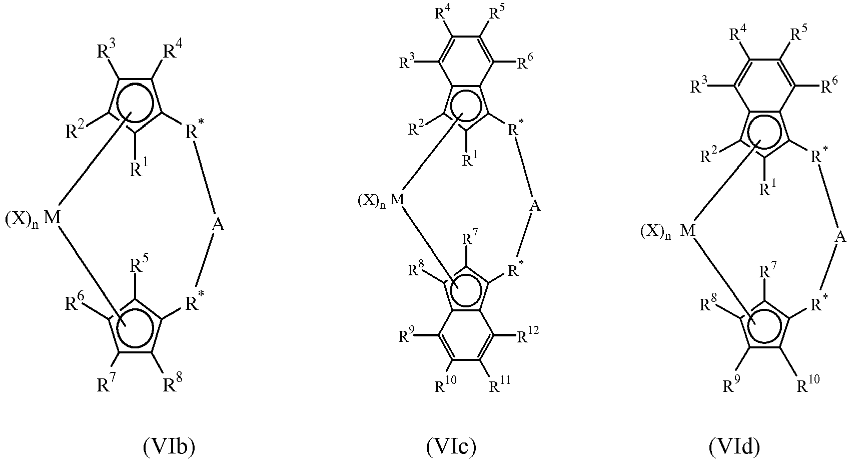 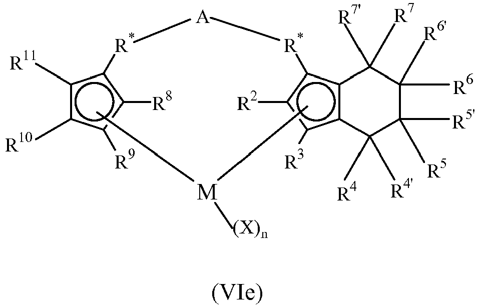 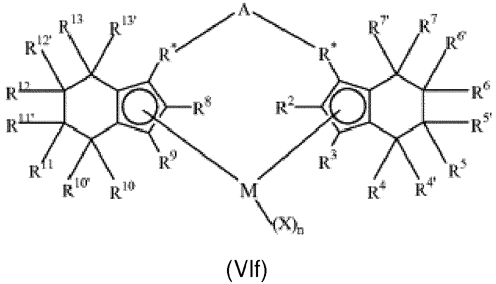 wherein in structures (Vla) to (Vlf), M is selected from the group consisting of Group 3 to Group 12 atoms, selected from the group consisting of Group 3 to Group 10 atoms, selected from the group consisting of Group 3 to Group 6 atoms, selected from the group consisting of Group 4 atoms, selected from the group consisting of Zr and Hf or is Zr; wherein Q in (Vla) to (Vlf) is selected from the group consisting of hydrocarbyls, lower hydrocarbyls, substituted hydrocarbyls, heterohydrocarbyls, alkyls, lower alkyls, substituted alkyls, heteroalkyls, alkenyls, lower alkenyls, substituted alkenyls, heteroalkenyls, alkynyls, lower alkynyls, substituted alkynyls, heteroalkynyls, alkoxys, lower alkoxys, aryloxys, hydroxyls, alkylthios, lower alkyls thios, arylthios, thioxys, aryls, substituted aryls, heteroaryls, aralkyls, aralkylenes, alkaryls, alkarylenes, halides, haloalkyls, haloalkenyls, haloalkynyls, heteroalkyls, heterocycles, heteroaryls, heteroatom-containing groups, silyls, boryls, phosphinos, phosphines, aminos, amines, cycloalkyls, acyls, aroyls, alkylthiols, dialkylamines, alkylamidos, alkoxycarbonyls, aryloxycarbonyls, carbamoyls, alkyl- and dialkyl-carbamoyls, acyloxys, acylaminos, aroylaminos, alkylenes, aryls, arylenes, alkoxys, aryloxys, amines, arylamines (e.g., pyridyl) alkylamines, phosphines, alkylphosphines, substituted alkyls, substituted aryls, substituted alkoxys, substituted aryloxys, substituted amines, substituted alkylamines, substituted phosphines, substituted alkylphosphines, carbamates, heteroallyls, carboxylates (examples of suitable carbamates and carboxylates include trimethylacetate, trimethylacetate, methylacetate, p-toluate, benzoate, diethylcarbamate, and dimethylcarbamate), fluorinated alkyls, fluorinated aryls, and fluorinated alkylcarboxylates; wherein the saturated groups defining Q may comprise from 1 to 20 carbon atoms; and wherein the aromatic groups may comprise from 5 to 20 carbon atoms; wherein R* may be selected from divalent alkyls, divalent lower alkyls, divalent substituted alkyls, divalent heteroalkyls, divalent alkenyls, divalent lower alkenyls, divalent substituted alkenyls, divalent heteroalkenyls, divalent alkynyls, divalent lower alkynyls, divalent substituted alkynyls, divalent heteroalkynyls, divalent alkoxys, divalent lower alkoxys, divalent aryloxys, divalent alkylthios, divalent lower alkyl thios, divalent arylthios, divalent aryls, divalent substituted aryls, divalent heteroaryls, divalent aralkyls, divalent aralkylenes, divalent alkaryls, divalent alkarylenes, divalent haloalkyls, divalent haloalkenyls, divalent haloalkynyls, divalent heteroalkyls, divalent heterocycles, divalent heteroaryls, divalent heteroatom-containing groups, divalent hydrocarbyls, divalent lower hydrocarbyls, divalent substituted hydrocarbyls, divalent heterohydrocarbyls, divalent silyls, divalent boryls, divalent phosphinos, divalent phosphines, divalent aminos, divalent amines, divalent ethers, divalent thioethers. Additionally, R* may be from the group of divalent hydrocarbylenes and heteroatom-containing hydrocarbylenes, selected from the group consisting of alkylenes, substituted alkylenes and heteroatom-containing hydrocarbylenes, selected from the group consisting of C₁ to C₁₂ alkylenes, C₁ to C₁₂ substituted alkylenes, and C₁ to C₁₂ heteroatom-containing hydrocarbylenes, or selected from the group consisting of C₁ to C₄ alkylenes. Both R* groups may be identical in structures (VIf).

A is as described above for (A) in structure (II), and more particularly, selected from the group consisting of a chemical bond, -O-, -S-, -SO₂-, -NR-, =SiR₂, =GeR₂, =SnR₂, -R₂SiSiR₂-, RP=, C₁ to C₁₂ alkylenes, substituted C₁ to C₁₂ alkylenes, divalent C₄ to C₁₂ cyclic hydrocarbons and substituted and unsubstituted aryl groups; or selected from the group consisting of C₅ to C₈ cyclic hydrocarbons, -CH₂CH₂-, =CR₂ and =SiR₂; wherein R is selected from the group consisting of alkyls, cycloalkyls, aryls, alkoxys, fluoroalkyls and heteroatom-containing hydrocarbons; R is selected from the group consisting of C₁ to C₆ alkyls, substituted phenyls, phenyl, and C₁ to C₆ alkoxys; or R is selected from the group consisting of methoxy, methyl, phenoxy, and phenyl; or A may be absent, in which case each R* is defined as for R¹-R¹³; each X is as described above in (I); n is an integer from 0 to 4, or from 1 to 3, or from 1 or 2; and R¹ through R¹³ are independently: selected from the group consisting of hydrogen radicals, hydrocarbyls, lower hydrocarbyls, substituted hydrocarbyls, heterohydrocarbyls, alkyls, lower alkyls, substituted alkyls, heteroalkyls, alkenyls, lower alkenyls, substituted alkenyls, heteroalkenyls, alkynyls, lower alkynyls, substituted alkynyls, heteroalkynyls, alkoxys, lower alkoxys, aryloxys, hydroxyls, alkylthios, lower alkyls thios, arylthios, thioxys, aryls, substituted aryls, heteroaryls, aralkyls, aralkylenes, alkaryls, alkarylenes, halides, haloalkyls, haloalkenyls, haloalkynyls, heteroalkyls, heterocycles, heteroaryls, heteroatom-containing groups, silyls, boryls, phosphinos, phosphines, aminos, amines, cycloalkyls, acyls, aroyls, alkylthiols, dialkylamines, alkylamidos, alkoxycarbonyls, aryloxycarbonyls, carbamoyls, alkyl- and dialkyl-carbamoyls, acyloxys, acylaminos, aroylaminos, through R¹³ may also be selected independently from C₁ to C₁₂ alkyls, C₂ to C₁₂ alkenyls, C₆ to C₁₂ aryls, C₇ to C₂₀ alkylaryls, C₁ to C₁₂ alkoxys, C₁ to C₁₂ fluoroalkyls, C₆ to C₁₂ fluoroaryls, and C₁ to C₁₂ heteroatom-containing hydrocarbons and substituted derivatives thereof; selected from the group consisting of hydrogen radical, fluorine radical, chlorine radical, bromine radical, C₁ to C₆ alkyls, C₂ to C₆ alkenyls, C₇ to C₁₈ alkylaryls, C₁ to C₆ fluoroalkyls, C₂ to C₆ fluoroalkenyls, C₇ to C₁₈ fluoroalkylaryls; or hydrogen radical, fluorine radical, chlorine radical, methyl, ethyl, propyl, isopropyl, butyl, isobutyl, tertiary butyl, hexyl, phenyl, 2,6-di-methylphenyl, and 4-tertiarybutylphenyl groups; wherein adjacent R groups may form a ring, either saturated, partially saturated, or completely saturated.

The structure of the metallocene catalyst component represented by (VIa) may take on many forms such as disclosed in, for example, US 5,026,798, US 5,703, 187, and US 5,747,406, including a dimer or oligomeric structure, such as disclosed in, for example, US 5,026,798 and US 6,069,213.

For the metallocene represented in (VId), R¹ and R² form a conjugated 6-membered carbon ring system that may or may not be substituted.

It is contemplated that the metallocene catalysts components described above include their structural or optical or enantiomeric isomers (racemic mixture), or may be a pure enantiomer.

As used herein, a single, bridged, asymmetrically substituted metallocene catalyst component having a racemic and/or meso isomer does not, itself, constitute at least two different bridged, metallocene catalyst components.

The "metallocene catalyst compound", also referred to herein as the "metallocene catalyst component" may comprise any combination of the above described features.

Metallocene compounds and catalysts are known in the art and any one or more may be utilized herein. Suitable metallocenes include but are not limited to all of the metallocenes disclosed and referenced in the U.S. Patents cited above, as well as those disclosed and referenced in U.S. Patent Nos. 7,179,876, 7,169,864, 7,157,531, 7,129,302, 6,995,109, 6,958,306, 6,884748, 6,689,847, U.S. Patent Application publication number 2007/0055028, and published PCT Application Nos. WO 97/22635, WO 00/699/22, WO 01/30860, WO 01/30861, WO 02/46246, WO 02/50088, WO 04/026921, and WO 06/019494. Additional catalysts suitable for use herein include those referenced in U.S. Patent Nos. 6,309,997, 6,265,338, U.S. Patent Application publication number 2006/019925, and the following articles: Chem Rev 2000, 100, 1253, Resconi; Chem Rev 2003, 103, 283; Chem Eur. J. 2006, 12, 7546 Mitsui; J Mol Catal A 2004, 213, 141; Macromol Chem Phys, 2005, 206, 1847; and J Am Chem Soc 2001, 123, 6847.

### Group 15-Containing Catalysts

The catalyst composition may include one or metallocene catalysts as described above and/or other conventional polyolefin catalysts, as well as Group 15 atom containing catalysts described below.

"Group 15 atom containing" catalysts or "Group 15-containing" catalysts may include complexes of Group 3 to 12 metal atoms, wherein the metal atom is 2 to 8 coordinate, the coordinating moiety or moieties including at least two Group 15 atoms, and up to four Group 15 atoms. The Group 15-containing catalyst component may be a complex of a Group 4 metal and from one to four ligands such that the Group 4 metal is at least 2 coordinate, the coordinating moiety or moieties including at least two nitrogens. Representative Group 15-containing compounds are disclosed in, for example, WO 99/01460, EP A1 0 893 454, U.S. Pat. Nos. 5,318,935, 5,889, 128, 6,333,389 B2 and 6,271,325 B1.

The Group 15-containing catalyst components may include Group 4 imino-phenol complexes, Group 4 bis(amide) complexes, and Group 4 pyridyl-amide complexes that are active towards olefin polymerization to any extent.

The Group 15-containing catalyst components may include HN(CH₂CH₂N(2,4,6-Me₃phenyl))₂MX₂, and HN(CH₂CH₂N(2,3,4,5,6-Me₅phenyl))₂MX₂, wherein M is Zr or Hf, and X is selected from F, Cl, Br, I, Me, benzyl, CH₂SiMe₃, and C₁ to C₅ alkyls or alkenyls.

The Group 15-containing catalyst component may include a bisamide compound such as [(2,3,4,5,6 Me₅C₆)NCH₂CH₂]₂NHZrBz₂.

### Mixed Catalysts

Additionally one type of catalyst compound described above can be combined with another type of catalyst compound described herein with one or more of the activator compositions herein disclosed.

It is further contemplated that other catalysts can be combined with the metallocene catalyst compounds described herein. For example, see U.S. Pat. Nos. 4,937,299, 4,935,474, 5,281,679, 5,359,015, 5,470,811, and 5,719,241.

Additionally, one or more metallocene catalyst compounds or catalyst compositions may be used in combination with one or more conventional-type catalyst compounds or catalyst compositions. Examples of mixed catalysts and catalyst systems are described in U.S. Pat. Nos. 4, 59,965, 4,325,837, 4,701,432, 5,124,418, 5,077,255, 5,183,867, 5,391,660, 5,395,810, 5,691,264, 5,723,399 and 5,767,031 and PCT Publication WO 96/23010 published Aug. 1, 1996.

It is further contemplated that two or more conventional-type transition metal catalysts may be combined with one or more conventional-type cocatalysts. Examples of mixed conventional-type transition metal catalysts are described in for example U.S. Pat. Nos. 4,154,701, 4,210,559, 4,263,422, 4,672,096, 4,918,038, 5,198,400, 5,237,025, 5,408,015 and 5,420,090.

It is also contemplated that metallocene catalysts may be activated with an activator composition as disclosed herein in combination with one or more other activators or cocatalysts as described below.

### Catalyst and Supported Catalyst Compositions

The catalyst compositions disclosed herein may comprise at least one activator composition as disclosed herein and one or more catalyst compounds as disclosed herein.

The supported catalyst compositions as disclosed herein may comprise a support, an activator composition as disclosed herein, and one or more catalyst compounds as disclosed herein. The support may be pre-treated with suitable compounds prior to treating with the activator composition. The catalyst compound may comprise:
(pentamethylcyclopentadienyl)(propylcyclopentadienyl)MX₂,
(tetramethylcyclopentadienyl)(propylcyclopentadienyl)MX₂,
(tetramethylcyclopentadienyl)(butylcyclopentadienyl)MX₂,
Me₂Si(indenyl)₂MX₂,
Me₂Si(tetrahydroindenyl)₂MX₂,
(n-propyl cyclopentadienyl)₂MX₂,
(n-butyl cyclopentadienyl)₂MX₂,
(1-methyl, 3-butyl cyclopentadienyl)₂MX₂,
HN(CH₂CH₂N(2,4,6-Me₃phenyl))₂MX₂,
HN(CH₂CH₂N(2,3,4,5,6-Me₅phenyl))₂MX₂,
(propyl cyclopentadienyl)(tetramethylcyclopentadienyl)MX₂,
(butyl cyclopentadienyl)₂MX₂,
(propyl cyclopentadienyl)₂MX₂, and mixtures thereof,
wherein M is Zr or Hf, and X is selected from F, Cl, Br, I, Me, benzyl, CH₂SiMe₃, and
C₁ to C₅ alkyls or alkenyls.

The supported catalyst composition may comprise two or more catalyst compounds. The two or more catalyst compounds may comprise a titanium, a zirconium, or a hafnium atom. The two or more catalyst compounds may comprise one or more metallocene compounds and one or more Group 15 containing metal compounds. The metallocene compound may comprise
(pentamethylcyclopentadienyl)(propylcyclopentadienyl)MX₂,
(tetramethylcyclopentadienyl)(propylcyclopentadienyl)MX₂,
(tetramethylcyclopentadienyl)(butylcyclopentadienyl)MX₂,
Me₂Si(indenyl)₂MX₂,
Me₂Si(tetrahydroindenyl)₂MX₂,
(n-propyl cyclopentadienyl)₂MX₂,
(n-butyl cyclopentadienyl)₂MX₂,
(1-methyl, 3-butyl cyclopentadienyl)₂MX₂,
(propyl cyclopentadienyl)(tetramethylcyclopentadienyl)MX₂,
(butyl cyclopentadienyl)₂MX₂,
(propyl cyclopentadienyl)₂MX₂, and mixtures thereof,
wherein M is Zr or Hf, and X is selected from F, Cl, Br, I, Me, benzyl, CH₂SiMe₃, and C₁ to C₅ alkyls or alkenyls.

The Group 15 metal containing compound may comprise
HN(CH₂CH₂N(2,4,6-Me₃phenyl))₂MX₂ or
HN(CH₂CH₂N(2,3,4,5,6-Me₅phenyl))₂MX₂, wherein M is Zr or Hf, and X is selected from F, Cl, Br, I, Me, benzyl, CH₂SiMe₃, and C₁ to C₅ alkyls or alkenyls.

The supported polymerization catalyst may comprise two catalyst compounds selected from:
(pentamethylcyclopentadienyl)(propylcyclopentadienyl)MX₂,
(tetramethylcyclopentadienyl)(propylcyclopentadienyl)MX₂,
(tetramethylcyclopentadienyl)(butylcyclopentadienyl)MX₂,
Me₂Si(indenyl)₂MX₂,
Me₂Si(tetrahydroindenyl)₂MX₂,
(n-propyl cyclopentadienyl)₂MX₂,
(n-butyl cyclopentadienyl)₂MX₂,
(1-methyl, 3-butyl cyclopentadienyl)₂MX₂,
(propyl cyclopentadienyl)(tetramethylcyclopentadienyl)MX₂,
(butyl cyclopentadienyl)₂MX₂ or
(propyl cyclopentadienyl)₂MX₂, and
HN(CH₂CH₂N(2,4,6-Me₃phenyl))₂MX₂ or
HN(CH₂CH₂N(2,3,4,5,6-Me₅phenyl))₂MX₂,
wherein M is Zr or Hf, and X is selected from the group consisting of F, Cl, Br, I, Me,
benzyl, CH₂SiMe₃, and C1 to C5 alkyls or alkenyls.

The supported catalyst composition may in the form of a substantially dry powder or be in the form of a slurry in at least one liquid vehicle. Examples of liquid vehicles include mineral oils, aromatic hydrocarbons or aliphatic hydrocarbons.

The supported catalyst composition may be in the form of a slurry in the one or more liquid vehicles at from about 1% to about 60% by weight based on the total weight of the slurry. The catalyst composition may be present in the slurry preferably at greater than or equal to about 1 %, or 2%, or 4%, or 6%, or 10%, or 15%, or 20%, or 25%, or 30%, or 40%, or 50%, based on the total weight of the slurry.

The ratio of activator composition to catalyst compound may be in the range of 1000 mol Al to 1 mol transition metal or from 500 mol Al to 1 mol transition metal or from 200 mol Al to 1 mol transition metal or from 100 mol Al to 1 mol transition metal.

### Method of Preparing the Catalyst Compositions

Methods for making the catalyst compositions may involve contacting one or more activator compositions as hereinbefore described with at least one catalyst compound. Contacting may also refer to combining, blending, mixing or modifying. The contacting may take place in the presence or absence of a suitable liquid vehicle.

The activator composition may be contacted with the at least one catalyst compound for a period of time from about a second to about 24 hours, or from about 1 minute to about 12 hours, or from about 1 minute to about 5 hours, or from about 2 minutes to about 2 hours.

Contacting the activator composition with the one or more catalyst compounds may be performed at elevated temperature. The contact temperature may be greater than 20°C, or 30°C, or 40°C, or 50°C, or 60°C, or 70°C, or 80°C, or 90°C, or 100°C, or 110°C, or 120°C, or 130°C.

### Methods of Preparing the Supported Catalyst Compositions

The supported catalyst compositions as hereinbefore described may be prepared by combining a supported activator composition and one or more catalyst compounds. The preparation may take place in the presence of a liquid, for example the liquid may be a mineral oil, toluene, hexane, isobutane or a mixture thereof. In one method the one or more catalyst compounds may be dissolved in a suitable liquid such as an aliphatic or aromatic hydrocarbon and then may be combined with a supported activator composition that has been slurried in a suitable liquid. A suitable liquid may be an aliphatic or aromatic hydrocarbon such as toluene.

The method may comprise the step of:
contacting at least one supported activator composition and at least one catalyst compound in at least one liquid vehicle, so as to form a slurry of the supported catalyst composition in said liquid vehicle.

The method may also comprise the steps of:
a) combining at least one supported activator composition with a liquid vehicle so as to form a slurry; and
b) combining at least one catalyst compound with the slurry formed in (a) so as to form a slurry of the supported catalyst composition in said liquid vehicle.

The method may also comprise the steps of:
a) combining at least one catalyst compound with a liquid vehicle; and
b) combining the supported activator composition with the mixture formed in a) so as to form a slurry of the supported catalyst composition in said liquid vehicle.

In another method the supported catalyst composition may be prepared by combining a substantially dry supported activator composition with a solution of one or more catalyst compounds wherein the volume of solutions of the one or more catalyst compounds is equal to or less than the pore volume of the supported activator composition. This is often referred to as 'incipient wetness' in the art. The resulting supported catalyst composition may then be substantially dried to a free flowing powder. Alternatively, the supported catalyst composition may be used as is with residual solvent remaining in the pores. Such incipient wetness mixing may be performed in a rotary mixer under a nitrogen atmosphere, most preferably the mixer is a tumble mixer.

Examples of mixing equipment for combining a supported activator composition with at least one catalyst compound, include a ribbon blender, a static mixer, a double cone blender, a drum tumbler, a drum roller, a dehydrator, a fluidized bed, a helical mixer and a conical screw mixer.

The amount of catalyst compound in the supported catalyst composition may vary widely. The catalyst compound loading may be between 0.1 pmol per gram of supported catalyst composition to 1000 pmol per gram of supported catalyst composition or between 1 pmol per gram and 500 pmol per gram or between 2 pmol per gram and 200 pmol per gram.

The at least one catalyst compound may be contacted with the supported activator composition for a period of time such that a substantial portion of the at least one catalyst compound is intimately mixed and/or substantially contacted with the supported activator.

The contact time for the at least one catalyst compound and the supported activator composition may vary depending on one or more of the conditions, temperature and pressure, the type of mixing apparatus, the quantities of the components to be combined, and even the mechanism for introducing the resulting supported catalyst composition into the reactor.

The supported activator composition may be contacted with the at least one catalyst compound for a period of time from about a second to about 24 hours, or from about 1 minute to about 12 hours, or from about 1 minute to about 5 hours, or from about 2 minutes to about 2 hours.

The supported activator composition and at least one catalyst compound may be spray dried or spray congealed. The resulting spray dried powder may be subsequently slurried in a suitable liquid vehicle. The skilled person would be familiar with the various spray drying techniques known in the art.

Contacting the supported activator composition with the one or more catalyst compounds may be performed at elevated temperature. The contact temperature may be greater than 20°C, or 30°C, or 40°C, or 50°C, or 60°C, or 70°C, or 80°C, or 90°C, or 100°C, or 110°C, or 120°C, or 130°C.

The contacting of the supported activator composition and the one or more catalyst compounds may be performed under an inert gaseous atmosphere, such as nitrogen. The combination of the supported catalyst and at least one catalyst compound may also be performed in the presence of olefin(s), solvents and hydrogen.

The supported catalyst composition may be dried to remove residual solvent. The supported catalyst composition may be dried at elevated temperatures for example greater than 20°C, or 30°C, or 40°C, or 50°C, or 60°C, or 70°C, or 80°C, or 90°C, or 100°C, or 110°C, or 120°C, or 130°C. The drying temperature may be less than 90°C, or 80°C, or 70°C, or 60°C, or 50°C, or 40°C.

Drying of the supported catalyst composition may also be performed under vacuum conditions. Alternatively or additionally drying may be facilitated by nitrogen purging or sparging through the solid or slurry.

One skilled in the art recognizes that depending on the supported activator composition and catalyst compounds used certain conditions of temperature and pressure would be required to prevent, for example, a loss in the activity of the catalyst composition or supported catalyst composition.

### Other Activators and Activation Methods for Catalyst Compounds

It may also be desirable to add one or more other activators to the catalyst compositions or supported catalyst compositions as herein disclosed. An activator is defined in a broad sense as any combination of reagents that increases the rate at which a transition metal compound oligomerizes or polymerizes unsaturated monomers, such as olefins. The catalyst compounds may be activated for oligomerization and/or polymerization catalysis in any manner sufficient to allow coordination or cationic oligomerization and/or polymerization.

Additionally, the activator may be a Lewis-base, such as for example, diethyl ether, dimethyl ether, ethanol, or methanol. Other activators that may be used include those described in WO 98/07515 such as tris (2,2',2"- nonafluorobiphenyl) fluoroaluminate.

Combinations of activators may be used. For example, alumoxanes and ionizing activators may be used in combinations, see for example, EP-B1 0 573 120, WO 94/07928 and WO 95/14044 and U.S. Pat. Nos. 5, 153,157 and 5,453,410. WO 98/09996 describes activating metallocene catalyst compounds with perchlorates, periodates and iodates including their hydrates. WO 98/30602 and WO 98/30603 describe the use of lithium (2,2'-bisphenyl-ditrimethylsilicate).4THF as an activator for a metallocene catalyst compound. WO 99/18135 describes the use of organo-boron-aluminum activators. EP-B1-0 781 299 describes using a silylium salt in combination with a non-coordinating compatible anion. WO 2007/024773 suggests the use of activator-supports which may comprise a chemically - treated solid oxide, clay mineral, silicate mineral, or any combination thereof. Also, methods of activation such as using radiation (see EP-B1-0 615 981) and electro-chemical oxidation are also contemplated as activating methods for the purposes of rendering the neutral metallocene catalyst compound or precursor to a metallocene cation capable of polymerizing olefins. Other activators or methods for activating a metallocene catalyst compound are described in, for example, U.S. Pat. Nos. 5,849,852, 5,859,653 and 5,869,723 and PCT WO 98/32775.

Alumoxanes may also be utilized as an activator in the catalyst composition. Alumoxanes are generally oligomeric compounds containing- Al(R)- O- subunits, where R is an alkyl group. Examples of alumoxanes include methylalumoxane (MAO), modified methylalumoxane (MMAO), ethylalumoxane and isobutylalumoxane. Alkylalumoxanes and modified alkylalumoxanes are suitable as catalyst activators, particularly when the abstractable ligand is a halide. Mixtures of different alumoxanes and modified alumoxanes may also be used. For further descriptions, see U.S. Pat. Nos. 4,665,208, 4,952,540, 5,041,584, 5,091,352, 5,206,199, 5,204,419, 4,874,734, 4,924,018, 4,908,463, 4,968,827, 5,329,032, 5,248,801, 5,235,081, 5,157,137, 5,103,031 and EP 0 561 476 A1, EP 0 279 586 B1, EP 0 516 476 A, EP 0 594 218 A1 and WO 94/10180.

Alumoxanes may be produced by the hydrolysis of the respective trialkylaluminum compound. MMAO may be produced by the hydrolysis of trimethylaluminum and a higher trialkylaluminum such as triisobutylaluminum. MMAO's are generally more soluble in aliphatic solvents and more stable during storage. There are a variety of methods for preparing alumoxane and modified alumoxanes, examples of which are described in, for example, U.S. Pat. Nos. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137 5,103,031, 5,391,793, 5,391,529, 5,693,838, 5,731,253, 5,731,451, 5,744,656, 5,847,177, 5,854,166, 5,856,256 and 5,939,346 and European publications EP-A-0 561 476, EP-B1-0 279 586, EP-A-0 594-218 and EP-B1-0 586 665, WO 94/10180 and WO 99/15534. A visually clear methylalumoxane may be used. A cloudy or gelled alumoxane can be filtered to produce a clear solution or clear alumoxane can be decanted from the cloudy solution. Another alumoxane is a modified methyl alumoxane (MMAO) cocatalyst type 3A (commercially available from Akzo Chemicals, Inc. under the trade name Modified Methylalumoxane type 3A, disclosed in U.S. Pat. No. 5,041,584).

An ionizing or stoichiometric activator, neutral or ionic, such as tri (n-butyl) ammonium tetrakis (pentafluorophenyl) boron, a trisperfluorophenyl boron metalloid precursor or a trisperfluoronapthyl boron metalloid precursor, polyhalogenated heteroborane anions (see, for example, WO 98/43983), boric acid (see, for example, U.S. Pat. No. 5,942,459) or combinations thereof, may also be used. The neutral or ionic activators may be used alone or in combination with alumoxane or modified alumoxane activators.

Examples of neutral stoichiometric activators may include tri-substituted boron, tellurium, aluminum, gallium and indium or mixtures thereof. The three substituent groups may be each independently selected from the group of alkyls, alkenyls, halogen, substituted alkyls, aryls, arylhalides, alkoxy and halides. The three substituent groups may be independently selected from the group of halogen, mono or multicyclic (including halosubstituted) aryls, alkyls, and alkenyl compounds and mixtures thereof; or alkenyl groups having 1 to 20 carbon atoms, alkyl groups having 1 to 20 carbon atoms, alkoxy groups having 1 to 20 carbon atoms and aryl groups having 3 to 20 carbon atoms (including substituted aryls). Alternatively, the three groups are alkyls having 1 to 4 carbon groups, phenyl, napthyl or mixtures thereof. The three groups may be halogenated, for example fluorinated, aryl groups. In yet other illustrative examples, the neutral stoichiometric activator is trisperfluorophenyl boron or trisperfluoronapthyl boron.

Ionic stoichiometric activator compounds may contain an active proton, or some other cation associated with, but not coordinated to, or only loosely coordinated to, the remaining ion of the ionizing compound. Such compounds and the like are described in, for example, European publications EP-A-0 570 982, EP-A-0 520 732, EP-A-0 495 375, EP-B1-0 500 944, EP-A-0 277 003 and EP-A-0 277 004, and U.S. Pat. Nos. 5,153,157, 5,198,401, 5,066,741, 5,206,197, 5,241,025, 5,384,299 and 5,502,124.

### Continuity Additives/Aids

It may also be desirable to add one or more continuity additives to the catalyst compositions or supported catalyst compositions, for example, to aid in regulating static levels in polymerization reactors. The continuity additive may be used as a part of the supported catalyst composition or introduced directly into the reactor independently of the supported catalyst composition. The continuity additive may be supported on the particulate support of the supported catalyst composition described herein.

Examples of continuity additives include, amide-hydrocarbon or ethoxylated-amide compounds such as described as "surface modifiers" in WO 96/11961; carboxylate compounds such as aryl-carboxylates and long chain hydrocarbon carboxylates, and fatty acid-metal complexes; alcohols, ethers, sulfate compounds, metal oxides and other compounds known in the art. Some specific examples of continuity additives include 1,2-diether organic compounds, magnesium oxide, ARMOSTAT 310, ATMER 163, ATMER AS-990, and other glycerol esters, ethoxylated amines (e.g., N,N-bis(2-hydroxyethyl)octadecylamine), alkyl sulfonates, and alkoxylated fatty acid esters; STADIS 450 and 425, KEROSTAT CE 4009 and KEROSTAT CE 5009. chromium N-oleylanthranilate salts, calcium salts of a Medialan acid and di-tert-butylphenol; POLYFLO 130, TOLAD 511 (a-olefin-acrylonitrile copolymer and polymeric polyamine), EDENOL D32, aluminum stearate, sorbitan-monooleate, glycerol monostearate, methyl toluate, dimethyl maleate, dimethyl fumarate, triethylamine, 3,3-diphenyl-3-(imidazol-1-yl)-propin, and like compounds.

Other continuity additives useful in embodiments disclosed herein are well known to those in the art. Regardless of which continuity additives are used, care should be exercised in selecting an appropriate continuity additive to avoid introduction of poisons into the reactor. In addition, in selected embodiments, the smallest amount of the continuity additives necessary to bring the static charge into alignment with the desired range should be used.

The continuity additives may be added to the reactor as a combination of two or more of the above listed continuity additives. The continuity additive(s) may be added to the reactor in the form of a solution or a slurry, such as a slurry with a mineral oil, and may be added to the reactor as an individual feed stream or may be combined with other feeds prior to addition to the reactor. For example, the continuity additive may be combined with the catalyst composition or catalyst composition slurry prior to feeding the combined catalyst-static control agent mixture to the reactor.

The continuity additives may be added to the reactor in an amount ranging from about 0.05 to about 200 ppmw, or from about 2 to about 100 ppmw, or from about 2 to about 50 ppmw, based on the polymer production rate. The continuity additives may also be added to the reactor in an amount of about 2 ppmw or greater, based on the polymer production rate.

### Methods of Using the Catalyst Compositions or Supported Catalyst Compositions

One skilled in the art recognizes that depending on the catalyst composition used, certain conditions of temperature and pressure would be required to prevent, for example, a loss in the activity of the catalyst composition.

The catalyst composition or supported catalyst composition as hereinbefore disclosed may be introduced directly into the polymerization reactor. The supported catalyst composition may be in the form of a slurry in a suitable liquid vehicle or may be in the form of a substantially dry powder.

It will be appreciated that the exact method of introduction may vary depending on one or more of the conditions, temperature and pressure, the type of mixing apparatus, and the quantities of the components to be combined.

### Polymerization Processes

Polymerization processes may include solution, gas phase, slurry phase and a high pressure process or a combination thereof. In illustrative embodiments, a gas phase or slurry phase polymerization of one or more olefins at least one of which is ethylene or propylene is provided. Optionally, the reactor is a gas phase fluidized bed polymerization reactor.

The catalyst compositions or supported catalyst compositions as hereinbefore described are suitable for use in any prepolymerization and/or polymerization process over a wide range of temperatures and pressures. The temperatures may be in the range of from - 60°C to about 280°C, from 50°C to about 200°C; from 60°C to 120°C from 70°C to 100°C or from 80°C to 95°C.

The present process may be directed toward a solution, high pressure, slurry or gas phase polymerization process of one or more olefin monomers having from 2 to 30 carbon atoms, preferably 2 to 12 carbon atoms, and more preferably 2 to 8 carbon atoms. The process is particularly well suited to the polymerization of two or more olefins or comonomers such as ethylene, propylene, 1-butene, 1-pentene, 4-methyl-1-pentene, 1-hexene, 1-octene or 1-decene.

Other olefins useful in the present process include ethylenically unsaturated monomers, diolefins having 4 to 18 carbon atoms, conjugated or nonconjugated dienes, polyenes, vinyl monomers and cyclic olefins. Useful monomers may include norbornene, norbornadiene, isobutylene, isoprene, vinylbenzocyclobutane, styrenes, alkyl substituted styrene, ethylidene norbornene, dicyclopentadiene and cyclopentene. In an illustrative embodiment of the present process, a copolymer of ethylene is produced, where with ethylene, a comonomer having at least one alpha-olefin having from 4 to 15 carbon atoms, preferably from 4 to 12 carbon atoms, and most preferably from 4 to 8 carbon atoms, is polymerized in a gas phase process. In another embodiment of the present process, ethylene or propylene is polymerized with at least two different comonomers, optionally one of which may be a diene, to form a terpolymer.

The present process may be directed to a polymerization process, particularly a gas phase or slurry phase process, for polymerizing propylene alone or with one or more other monomers including ethylene, and/or other olefins having from 4 to 12 carbon atoms. The polymerization process may comprise contacting ethylene and optionally an alpha-olefin with one or more of the catalyst compositions or supported catalyst compositions as hereinbefore described in a reactor under polymerization conditions to produce the ethylene polymer or copolymer.

Suitable gas phase polymerization processes are described in, for example, U.S. Pat. Nos. 4,543,399, 4,588,790, 5,028,670, 5,317,036, 5,352,749, 5,405,922, 5,436,304, 5,453,471, 5,462,999, 5,616,661, 5,668,228, 5,627,242, 5,665,818, and 5,677,375, and European publications EP-A-0 794 200, EP-A-0 802 202, EP-A2 0 891 990, and EP-B-634 421.

A slurry polymerization process generally uses pressures in the range of from about 1 to about 50 atmospheres and even greater and temperatures in the range of 0°C to about 120°C. In a slurry polymerization, a suspension of solid, particulate polymer is formed in a liquid polymerization diluent medium to which ethylene and comonomers and often hydrogen along with catalyst are added. The suspension including diluent is intermittently or continuously removed from the reactor where the volatile components are separated from the polymer and recycled, optionally after a distillation, to the reactor. The liquid diluent employed in the polymerization medium is typically an alkane having from 3 to 7 carbon atoms, preferably a branched alkane. The medium employed should be liquid under the conditions of polymerization and relatively inert. When a propane medium is used the process must be operated above the reaction diluent critical temperature and pressure. Preferably, a hexane or an isobutane medium is employed.

A preferred polymerization process is referred to as a particle form polymerization, or a slurry process where the temperature is kept below the temperature at which the polymer goes into solution. Such technique is well known in the art, and described in for instance U.S. Pat. No. 3,248,179. Other slurry processes include those employing a loop reactor and those utilizing a plurality of stirred reactors in series, parallel, or combinations thereof. Examples of slurry processes include continuous loop or stirred tank processes. Also, other examples of slurry processes are described in U.S. Pat. No. 4,613,484. Examples of solution processes are described in U.S. Pat. Nos. 4,271,060, 5,001,205, 5,236,998 and 5,589,555.

### EXAMPLES

It is to be understood that while the present disclosure has been described in conjunction with the specific embodiments thereof, the foregoing description is intended to illustrate and not limit the scope of the disclosure. Other aspects, advantages and modifications will be apparent to those skilled in the art to which the disclosure pertains. Therefore, the following examples are put forth so as to provide those skilled in the art with a complete disclosure and description of how to make and use the disclosed compositions, and are not intended to limit the scope of the disclosure.

### Activator Compositions and Catalyst Compositions

150 µl of a 2M solution of pentafluorophenol (PFP) in toluene was mixed with 2.7 µl of water in a glass vial. To the mixture was added 0.3 ml of a 1M solution of triisobutylaluminum (TIBAL) in toluene. Gas was evolved with the generation of heat. 11 ml of 1-octene was added to the resulting activator composition and the vial was placed in an insulated sleeve. 10 µmol of (tetramethylcyclopentadienyl)(propylcyclopentadienyl)ZrMe₂ was added and the vial was sealed with a septum cap and a thermocouple was inserted through the cap and below the liquid level in the vial. The temperature was recorded every five seconds. The procedure was repeated using different ratios of components and the details of the resulting catalyst compositions are collected in Table 1.

| **Table 1** | | | |
|---|---|---|---|
| Catalyst # | PFP/A1 | Al/H₂0 | Al/Zr |
| 1 | 1 | 2 | 30 |
| 2 | 0.75 | 2 | 30 |
| 3 | 1 | 1.6 | 30 |
| 4 | 0.75 | 1.6 | 30 |

Figure 1 illustrates the change in temperature with time for the polymerizations. It can be seen that each of the polymerizations resulted in the generation of significant heat. Further, modification of the component ratios resulted in a change in the kinetic profile of the polymerizations.

### Supported Activator Compositions and Supported Catalyst Compositions

A comparative supported activator composition and comparative supported catalyst composition were prepared as follows. 64.8 µl of water and 4 ml of toluene were combined in a glass vial and shaken vigorously. 3.65 ml of a 1M solution of triisobutylaluminum in toluene was added and the resulting mixture agitated vigorously. 1 g of Davison 955 silica which had been previously calcined at 600°C was added and mixed. The solvent was then removed under vacuum at ambient temperature. To 0.5 g of the resulting solid comparative supported activator composition was added 2.5 ml of n-hexane followed by 45 µl of a 0.7M solution of (n-propyl cyclopentadienyl)₂HfMe₂ in n-hexane. The mixture was agitated and the solvent removed under vacuum at ambient temperature to yield a solid comparative supported catalyst composition.

The catalyst was tested in a polymerization reactor and the results are collected in Table 2 under 'comparative'. Polymerization testing utilized the following procedure.

A 2L autoclave equipped with a helical agitator was charged with 400g of fine granular sodium chloride under an inert N₂ atmosphere. The reactor was heated to 105°C and the agitator set to 150 rpm. After holding at 1 hour for 105°C, the reactor was pressure purged six times with 2 alternating between 0 and 2.07 MPa (0 and 300 psig). The reactor was then filled with N₂ to 1.38 MPa (200 psig). 5g of triethylaluminum treated silica was added to the reactor by pressuring it in with nitrogen from a steel cylinder. The agitator was set to 350 rpm and the reactor temperature set to 85 °C. Once the temperature of the reactor was stable, it was vented to below 6.89 kPa (1 psig) and the vent closed. The reactor was then composed with hydrogen, 1-hexene and ethylene such that the reactor pressure was 1.59 MPa (230 psig), the H₂ concentration was 450 ppmv, and the 1-hexene/ethylene mole ratio was 0.2. A pre-weighed charge of catalyst, between 10-15 mg, was pressured into the reactor from a small steel cylinder with nitrogen. The pressure set-point of the reactor was set to 1.86 MPa (270 psig) and ethylene was fed to the reactor to maintain this set-point. H₂ and 1-hexene were also fed to the reactor such that their set-point concentration and C₆/C₂ ratio, respectively, were maintained. After one hour of run time, the reactor feeds were blocked in, and the reactor cooled, opened and the reactor contents quantitatively recovered and weighed. The activity of the catalyst is the quotient of the mass of polymer produced/the mass of catalyst added. Activities are collected in Table 2.

An inventive supported activator composition and supported catalyst composition was prepared as follows. 1.35 ml of a 2M solution of pentafluorophenol (PFP) in toluene was added to a 40 ml glass vial. 41.2 µl of water and 3 ml of toluene were added. The vial was shaken vigorously to disperse the water. 3.65 ml of a 1M solution of triisobutylaluminum (TIBAL) in toluene was added and the mixture was again agitated vigorously, 1g of Davison 955 silica that had been previously calcined at 600 °C (955-600) was added, mixed, and then the solvent removed under vacuum at ambient temperature. To 0.5 g of the resulting solid supported activator composition was added 2.5 ml of n-hexane followed by 45 µl of a 0.7M solution of (n-propyl cyclopentadienyl)₂HfMe₂ in n-hexane. The mixture was agitated and the solvent removed under vacuum at ambient temperature to yield a solid supported catalyst composition. The catalyst (Inventive 1) was tested in a polymerization reactor using the above described procedure.

A further inventive supported catalyst composition (Inventive 2) was prepared following the same procedure as for Inventive 1 except that 1.13 ml of PFP was utilized in the preparation of the supported activator composition. This catalyst was also tested for polymerization activity.

A further inventive catalyst composition (Inventive 3) was prepared following the same procedure as for Inventive 1 except that 81µl of a 0.25M solution of (n-propyl cyclopentadienyl)₂HfMe₂ in n-hexane was added to 0.2 g of supported activator composition and the resulting supported catalyst composition tested in a polymerization reaction without removal of the solvent.

Further supported catalyst compositions (Inventive 4, 5 and 6) were prepared using a similar method to Inventive 3, but with different amounts of (n-propyl cyclopentadienyl)₂HfMe₂. The catalysts were tested in a polymerization reactor and the results are collected in Table 2.

An inventive supported activator composition and supported catalyst composition was prepared as follows. 1.82 ml of a 2M solution of pentafluorophenol (PFP) in toluene was added to a 40 ml glass vial. 32.8 µl of water and 3.6 ml of toluene were added. The vial was shaken vigorously to disperse the water. 3.65 ml of a 1M solution of triisobutylaluminum (TIBAL) in toluene was added and the mixture was again agitated vigorously. 1g of Ineos ES-757 silica that had been previously calcined at 875°C (757-875) was added, mixed, and then the solvent removed under vacuum at ambient temperature. To 0.2 g of the resulting solid supported activator composition was added 72 µl of a 0.25M solution of (n-propyl cyclopentadienyl)₂HfMe₂ in n-hexane. The resulting supported catalyst composition (Inventive 7) was tested in a polymerization reactor using the above procedure.

| **Table 2** | | | | | | |
|---|---|---|---|---|---|---|
| **Catalyst** | **Preparation method** | **Activator** | **[Al] mmol/g** | **[Hf] µmol/g** | **[Al]/[Hf]** | **Productivity gPE/hr** |
| Comparative | Solvent Evaporation | H₂O/TIBAL/955-600 | 2 | 63 | 32 | 316 |
| Comparative | Solvent Evaporation | H₂O/TIBAL/955-600 | 2 | 63 | 32 | 339 |
| Inventive 1 | Solvent Evaporation | PFP/H₂O/TIBAL/955-600 | 1.8 | 63 | 29 | 1633 |
| Inventive 2 | Solvent Evaporation | PFP/H₂O/TIBAL/955-600 | 1.8 | 63 | 29 | 1195 |
| Inventive 3 | Incipient Wetness | PFP/H₂O/TIBAL/955-600 | 1.8 | 101 | 18 | 3234 |
| Inventive 4 | Incipient Wetness | PFP/H₂O/TIBAL/955-600 | 1.8 | 56 | 32 | 2082 |
| Inventive 5 | Incipient Wetness | PFP/H₂O/TIBAL/955-600 | 1.8 | 90 | 20 | 2957 |
| Inventive 6 | Incipient Wetness | PFP/H₂O/TIBAL/955-600 | 1.8 | 32 | 56 | 2575 |
| Inventive 6 | Incipient Wetness | PFP/H₂O/TIBAL/955-600 | 1.8 | 32 | 56 | 2125 |
| Inventive 7 | Incipient Wetness | PFP/H₂O/TIBAL/757-875 | 1.8 | 90 | 20 | 2155 |

The inventive supported catalyst compositions have polymerization activities that are up to an order of magnitude greater than comparative systems.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited.

## Claims

1. A method for producing an activator composition for olefin polymerization, the method comprising the steps of:
(a) combining at least one compound comprising at least one active hydrogen moiety and at least one fluorine substituent with water; and
(b) adding at least one compound comprising at least one aluminum alkyl moiety;
wherein the at least one compound comprising at least one aluminum alkyl moiety is a trialkylaluminum.

2. The method of claim 1, wherein the at least one compound comprising at least one aluminum alkyl moiety is trimethylaluminum, triethylaluminum, triisopropylaluminum, triisobutylaluminum, trihexylaluminum or mixtures thereof.

3. The method of claim 1, wherein the at least one compound comprising at least one active hydrogen moiety and at least one fluorine substituent is represented by the formula:
(F)ₙ-Ph-(OH)ₘ
wherein n is a number from 1 to 5; and
m is a number from 1 to 5.

4. The method of claim 1, wherein the at least one compound comprising at least one active hydrogen moiety and at least one fluorine substituent is perfluorophenol.

5. The method of claim 1, wherein the at least one compound comprising at least one aluminum alkyl moiety is triisobutylaluminum and wherein the at least one compound comprising at least one active hydrogen moiety and at least one fluorine substituent is perfluorophenol.

6. The method according to any one of claims 1 to 5, further comprising combining the activator composition with at least one support.

7. The method according to claim 6 wherein the support is a particulate inorganic oxide.

8. The method according to claim 7 wherein the particulate inorganic oxide has been pretreated with an aluminum alkyl, an alumoxane or a silane.

9. The method according to claim 1, wherein the molar ratio of the at least one compound comprising at least one active hydrogen moiety and at least one fluorine substituent and the at least one compound comprising at least one aluminum alkyl moiety is from 1:10 to 10:1.

10. The method according to claim 1 or claim 9, wherein the molar ratio of the at least one compound comprising at least one aluminum alkyl moiety to water is from 1:2 to 2:1.

## Patentansprüche

1. Verfahren zum Herstellen einer Aktivatorzusammensetzung für eine Olefinpolymerisation, das Verfahren umfassend die Schritte:
(a) Kombinieren mindestens einer Verbindung, umfassend mindestens einen aktiven Wasserstoffanteil und mindestens einen Fluorsubstituenten, mit Wasser; und
(b) Hinzufügen mindestens einer Verbindung, umfassend mindestens einen Aluminiumalkylanteil;
wobei die mindestens eine Verbindung, umfassend mindestens einen Aluminiumalkylanteil, ein Trialkylaluminium ist.

2. Verfahren nach Anspruch 1, wobei die mindestens eine Verbindung, umfassend mindestens einen Aluminiumalkylanteil, Trimethylaluminium, Triethylaluminium, Triisopropylaluminium, Triisobutylaluminium, Trihexylaluminium oder Mischungen davon ist.

3. Verfahren nach Anspruch 1, wobei die mindestens eine Verbindung, umfassend mindestens einen aktiven Wasserstoffanteil und mindestens einen Fluorsubstituenten, durch die Formel dargestellt wird:
(F)ₙ-Ph-(OH)ₘ
wobei n eine Zahl von 1 bis 5 ist; und
m eine Zahl von 1 bis 5 ist.

4. Verfahren nach Anspruch 1, wobei die mindestens eine Verbindung, umfassend mindestens einen aktiven Wasserstoffanteil und mindestens einen Fluorsubstituenten, Perfluorphenol ist.

5. Verfahren nach Anspruch 1, wobei die mindestens eine Verbindung, umfassend mindestens einen Aluminiumalkylanteil, Triisobutylaluminium ist und wobei die mindestens eine Verbindung, umfassend mindestens einen aktiven Wasserstoffanteil und mindestens einen Fluorsubstituenten, Perfluorphenol ist.

6. Verfahren nach einem der Ansprüche 1 bis 5, ferner umfassend das Kombinieren der Aktivatorzusammensetzung mit mindestens einem Träger.

7. Verfahren nach Anspruch 6, wobei der Träger ein partikelförmiges anorganisches Oxid ist.

8. Verfahren nach Anspruch 7, wobei das partikelförmige anorganische Oxid mit einem Aluminiumalkyl, einem Alumoxan oder einem Silan vorbehandelt wurde.

9. Verfahren nach Anspruch 1, wobei das Molverhältnis der mindestens einen Verbindung, umfassend mindestens einen aktiven Wasserstoffanteil und mindestens einen Fluorsubstituenten, und der mindestens einen Verbindung, umfassend mindestens einen Aluminiumalkylanteil, von 1 : 10 bis 10 : 1 beträgt.

10. Verfahren nach Anspruch 1 oder 9, wobei das Molverhältnis der mindestens einen Verbindung, umfassend mindestens einen Aluminiumalkylanteil, zu Wasser von 1 : 2 bis 2 : 1 beträgt.

## Revendications

1. Procédé de production d'une composition d'activateur pour une polymérisation d'oléfine, le procédé comprenant les étapes consistant à :
(a) combiner au moins un composé comprenant au moins un fragment d'hydrogène actif et au moins un substituant fluor avec de l'eau ; et
(b) ajouter au moins un composé comprenant au moins un fragment alkylaluminium ;
dans lequel l'au moins un composé comprenant au moins un fragment alkylaluminium est un trialkylaluminium.

2. Procédé selon la revendication 1, dans lequel l'au moins un composé comprenant au moins un fragment alkylaluminium est le triméthylaluminium, le triéthylaluminium, le triisopropylaluminium, le triisobutylaluminium, le trihexylaluminium ou des mélanges de ceux-ci.

3. Procédé selon la revendication 1, dans lequel l'au moins un composé comprenant au moins un fragment d'hydrogène actif et au moins un substituant fluor est représenté par la formule :
(F)ₙ-Ph-(OH)ₘ
dans laquelle n est un nombre allant de 1 à 5 ; et m est un nombre allant de 1 à 5.

4. Procédé selon la revendication 1, dans lequel l'au moins un composé comprenant au moins un fragment d'hydrogène actif et au moins un substituant fluor est le perfluorophénol.

5. Procédé selon la revendication 1, dans lequel l'au moins un composé comprenant au moins un fragment alkylaluminium est le triisobutylaluminium et dans lequel l'au moins un composé comprenant au moins un fragment d'hydrogène actif et au moins un substituant fluor est le perfluorophénol.

6. Procédé selon l'une quelconque des revendications 1 à 5, comprenant en outre la combinaison de la composition d'activateur avec au moins un support.

7. Procédé selon la revendication 6, dans lequel le support est un oxyde inorganique particulaire.

8. Procédé selon la revendication 7, dans lequel l'oxyde inorganique particulaire a été prétraité avec un alkylaluminium, un alumoxane ou un silane.

9. Procédé selon la revendication 1, dans lequel le rapport molaire de l'au moins un composé comprenant au moins un fragment d'hydrogène actif et au moins un substituant fluor et de l'au moins un composé comprenant au moins un fragment alkylaluminium va de 1:10 à 10:1.

10. Procédé selon la revendication 1 ou la revendication 9, dans lequel le rapport molaire de l'au moins un composé comprenant au moins un fragment alkylaluminium à l'eau va de 1:2 à 2:1.
